(19) Europäisches Patentamt
European Patent Office
Office européen des brevets

(11) **EP 4 667 333 A1**

(12) **EUROPEAN PATENT APPLICATION**
published in accordance with Art. 153(4) EPC

(43) Date of publication:
**24.12.2025 Bulletin 2025/52**

(21) Application number: **24778723.7**

(22) Date of filing: **08.02.2024**

(51) International Patent Classification (IPC):
***B62D 25/20*** *(2006.01)*

(52) Cooperative Patent Classification (CPC):
**B62D 21/157; B62D 25/025; B62D 25/20;
B62D 25/2036**

(86) International application number:
**PCT/JP2024/004373**

(87) International publication number:
**WO 2024/202578 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.03.2023 JP 2023049134**

(71) Applicant: **JFE Steel Corporation
Tokyo 100-0011 (JP)**

(72) Inventors:
• **ISHIKAWA, Toshiharu
Tokyo 100-0011 (JP)**
• **HIGAI, Kazuhiko
Tokyo 100-0011 (JP)**
• **SHIOZAKI, Tsuyoshi
Tokyo 100-0011 (JP)**
• **NAKAGAITO, Tatsuya
Tokyo 100-0011 (JP)**
• **KAWASAKI, Yoshiyasu
Tokyo 100-0011 (JP)**
• **TOJI, Yuki
Tokyo 100-0011 (JP)**

(74) Representative: **Hoffmann Eitle
Patent- und Rechtsanwälte PartmbB
Arabellastraße 30
81925 München (DE)**

(54) **SIDE SILL STRUCTURE OF AUTOMOBILE**

(57)     A side sill structure of an automobile according to the present invention includes: a partition member 2 that vertically passes through a closed sectional space 3 in a side sill 1. The side sill structure of an automobile, in which structure the closed sectional space 3 is partitioned into two closed sectional spaces 3a and 3b in a vehicle width direction by the partition member 2, includes an impact absorption structure A including a pair of sectionally groove-shaped members 4a and 4b that are joined to the partition member 2 in a state of sandwiching the partition member 2 from both sides in the closed sectional spaces 3a and 3b and form closed sectional spaces 5a and 5b respectively with the partition member 2, and a bulkhead 6 having a specific structure and arrangement form and installed in each of the closed sectional spaces 5a and 5b. The bulkheads 6 in the closed sectional spaces 5a and 5b are provided to be opposed to each other in the vehicle width direction with the partition member 2 being interposed therebetween, and each of the bulkheads 6 is joined to at least the sectionally groove-shaped members 4a and 4b.

FIG.1

**Description**

Field

The present invention relates to a side sill structure of a vehicle body side portion of an automobile, and specifically relates to a side sill structure suitable for an automobile including a battery module below a floor panel between both side sills.

Background

In general, in an automobile loaded with a large capacity battery, such as a battery powered vehicle (battery electric vehicle (BEV)) or a plug-in hybrid electric vehicle (PHEV) (hereinafter, collectively referred to as "electric vehicles"), a battery module is mounted below a floor panel. The battery module includes a battery cell (battery pack), and a battery case to store the battery cell. In general, the battery case has a role of protecting the battery cell from an impact load, and a member having high rigidity and high proof stress (high yield strength) is used. A member having a role of absorbing energy by deformation of the member itself is arranged around the battery case. Specifically, in a case of side collision (side impact), a side sill absorbs energy of the impact load from a side of a vehicle body, and a remaining load is supported by a floor cross member or a battery case side member. At this time, when a deformation amount required for energy absorption of the side sill is small, an energy absorption portion can be reduced and volume of the battery module can be expanded instead, whereby a cruising distance can be increased. From the above, there is a demand for a lightweight side sill structure having an excellent collision energy absorption property (impact energy absorption property).

Conventionally, as a technique of improving stiffness of a side sill and improving a collision energy absorption property (impact energy absorption property) at the time of side collision (side impact), the following proposal has been made. Patent Literature 1 discloses a technique in which a bulkhead in a vehicle width direction is provided inside a side sill (closed sectional space) of a closed cross section structure forming a vehicle side surface of an automobile and cross-section collapsing of the side sill at the time of the side collision (side impact) of the side sill is prevented. A flange portion is formed on an outer periphery of the bulkhead, and is welded and fixed to a reinforcement in the side sill. In addition, Patent Literature 2 and 3 discloses a technique related to a structure in which a partition member that vertically passes through the inside of a side sill is provided and a closed sectional space in the side sill is partitioned into two closed sectional spaces in a vehicle width direction by the partition member. In this technique, a plurality of bulkheads in the vehicle width direction is arranged in the closed sectional space in the side sill, and a combination of the bulkheads and the partition member prevents cross-section collapsing of the side sill at the time of a side collision (side impact). In these technologies, the partition member is provided to prevent cross-section collapsing caused by the side sill being opened in a vertical direction at the time of the side collision. In the technique disclosed in Patent Literature 2, the bulkheads are arranged only in one of spaces sandwiching the partition member in the closed sectional space in the side sill. On the other hand, in the technique disclosed in Patent Literature 3, the bulkheads are arranged in both sides sandwiching the partition member in the closed sectional space in the side sill.

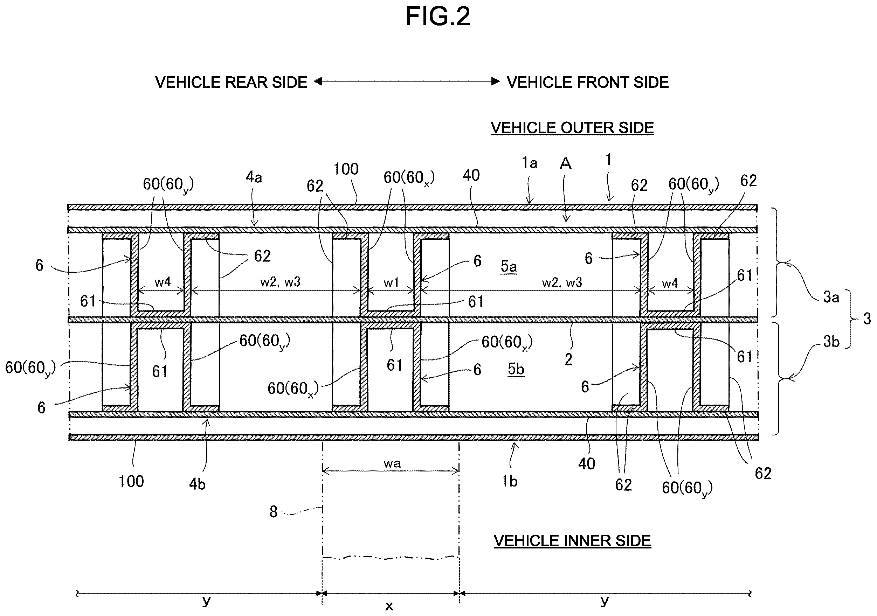

Furthermore, Patent Literature 4 discloses a technique of arranging, in a structure which includes a partition member vertically passing through the inside of a side sill and in which a closed sectional space in the side sill is partitioned by the partition member into two closed sectional spaces in a vehicle width direction, an impact absorption member having a hat-shaped cross section in each of both sides of the partition member (inside and outside of the partition member). In addition, Patent Literature 5 discloses a technique of controlling local deformation while maintaining impact absorbing capability by holding a plurality of ridge line sections in a vehicle width direction at intervals in a closed sectional space in a side sill and arranging an impact absorption member having a wave shape that moves up and down in a front-rear direction of a vehicle body. In addition, Patent Literature 6 discloses, as a system to reinforce a cavity in a vehicle frame, a structural reinforcement system (FIG. 2) including a plurality of longitudinal ribs interconnected to a plurality of transverse ribs and including a rigid carrier that provides structural reinforcement in a cavity wall, an insertion member corresponding to a stiffener, and a joining material that joins the cavity wall and the carrier.

Citation List

Patent Literature

Patent Literature 1: Japanese Patent Application Laid-open No. 10-59218
Patent Literature 2: Japanese Patent Application Laid-open No. 2009-202620
Patent Literature 3: Japanese Patent Application Laid-open No. 2013-49378

Patent Literature 4: Japanese Patent Application Laid-open No. 2017-226353
Patent Literature 5: Japanese Patent Application Laid-open No. 2021-146973
Patent Literature 6: JP 2011-530450 A

Summary

Technical Problem

Since the technique disclosed in Patent Literature 1 has a structure in which the bulkhead is long in the vehicle width direction and is easily buckled, there is a problem that buckling of the bulkhead easily occurs at the time of side collision, and cross-section collapsing of the side sill occurs when the buckling of the bulkhead starts to occur. Thus, an appropriate collision energy absorption property (impact energy absorption property) cannot be acquired. Furthermore, as in the technologies disclosed in Patent Literature 2 and 3, in a side sill having a partition member, even in a case where the bulkheads are arranged in the closed sectional space in the side sill, sufficient collision energy absorption characteristics cannot be acquired. In the technique disclosed in Patent Literature 2, since the bulkheads are arranged only in one of the closed sectional spaces sandwiching the partition member, the bulkheads have only a function of maintaining a cross-sectional shape of the one closed sectional space, and a sufficient collision energy absorption characteristic cannot be acquired. Even in a case where the bulkheads are arranged in both of spaces sandwiching the partition member as in the technique disclosed in Patent Literature 3, the acquired collision energy absorption characteristic is not sufficient.

Furthermore, in the technique disclosed in Patent Literature 3, it is necessary to provide slits in the partition member in order to insert the bulkheads, and in a case where a plurality of the bulkheads is installed in a longitudinal direction of the side sill, an installation interval of the bulkheads cannot be made long in order to avoid a decrease in strength of the partition member due to the provision of the slits. Thus, there is a problem that the number of installed bulkheads is increased and an increase in weight is caused. Furthermore, as in the technique disclosed in Patent Literature 4, in the side sill having the partition member, it is not possible to acquire the sufficient collision energy absorption characteristic simply by arranging the impact absorption member having the hat-shaped cross section on the both sides of the partition member (inside and outside of the partition member). On the other hand, in the technique disclosed in Patent Literature 5, an impact load at the time of side collision can be uniformly transmitted while being dispersed in a cross section perpendicular to a vehicle width direction, whereby the high collision energy absorption characteristic can be acquired. However, in a side sill inner reinforcing member having a constant cross section in a vehicle front-rear direction, since the reinforcing member is also present in a portion that does not need to be reinforced, weight may be excessive. In addition, in the technique disclosed in Patent Literature 6, with respect to a thickness and the interval of the transverse rib and the longitudinal rib, the thickness is set to 2 to 8 mm and the interval is set to 20 to 40 mm. Thus, similarly to the technique disclosed in Patent Literature 5, since the reinforcing member is also present in a portion that does not need to be reinforced, there is a possibility that weight becomes excessive.

The present invention has been made in view of the above problems, and an object thereof is to provide a side sill structure of an automobile which side sill structure is capable of acquiring a high collision energy absorption characteristic with a small collision deformation amount while controlling an increase in weight by a structural member.

Solution to Problem

As a result of repeated studies to solve the above problems, the present inventors have found that it is possible to solve the above problems by using a partition member that vertically passes through a closed sectional space in a side sill and providing an impact absorption structure having a specific structure in the closed sectional space. Specifically, it has been found that it is possible to acquire a high collision energy absorption property while controlling an increase in weight by structural members by providing an impact absorption structure which includes a pair of sectionally groove-shaped members joined to each other in a closed sectional space of a side sill while sandwiching a partition member from both sides and a bulkhead having a specific structure and arrangement form and installed in a closed sectional space formed between each of the sectionally groove-shaped members and the partition member, and in which these are structurally integrated. In addition, it has been found that it is possible to acquire a substantially similar effect, that is, a high collision energy absorption property while controlling an increase in weight by the structural member by providing the sectionally groove-shaped member only on a vehicle outer side, providing a bulkhead having a specific structure and arrangement form in each of a closed sectional space formed between the sectionally groove-shaped member and a partition member and a closed sectional space on a vehicle inner side of a side sill, and forming an impact absorption structure in which these are structurally integrated. The present invention has been made based on such findings, and the gist thereof is as follows.

A side sill structure of an automobile according to a first aspect of the present invention includes a partition member vertically passing through a closed sectional space in a side sill, the partition member being configured to partition the closed sectional space into two closed sectional spaces in a vehicle width direction, and includes: an impact absorption structure including a pair of sectionally groove-shaped members joined to the partition member in a state of sandwiching the partition member from both sides and forming closed sectional spaces respectively with the partition member in the closed sectional spaces, and bulkheads provided respectively in the closed sectional spaces in the vehicle width direction to partition the closed sectional spaces and provided at a plurality of positions at intervals in a vehicle front-rear direction in the closed sectional spaces, wherein each of the bulkheads includes a plurality of bulkhead portions arranged in parallel, and a junction configured to couple the adjacent bulkhead portions between side end portions thereof, the bulkhead in the closed sectional space and the bulkhead in the closed sectional space are provided at a same position in the vehicle front-rear direction in such a manner that at least one each of the junctions are opposed to each other in the vehicle width direction with the partition member being interposed therebetween, and each of the bulkheads is joined to at least the sectionally groove-shaped member or the sectionally groove-shaped member, a part of bulkhead portions among all the bulkhead portions included in the plurality of bulkheads provided at intervals in the vehicle front-rear direction are arranged in a region that is within a width of a floor cross member in the vehicle front-rear direction, and remaining bulkhead portions are arranged in a region that is outside the width of the floor cross member in the vehicle front-rear direction, and the two or more bulkhead portions are arranged in the region, and w1 < w2 is satisfied where an interval between the two bulkhead portions adjacent to each other in the region is represented by w1 and an interval between the bulkhead portions and the bulkhead portion adjacent thereto is represented by w2 in the vehicle front-rear direction.

Beads may be formed on lateral surface portions of the sectionally groove-shaped members in the vehicle width direction, and joining flange portions formed on the bulkhead portions of the bulkheads may be fitted into the beads.

An extending plate part may be continuously provided at each of an upper end and a lower end of the junctions, which are opposed to the partition member, of the bulkheads, and in each of upper and lower joint portions between the sectionally groove-shaped members and the partition member, the both members may be joined in a state in which the upper and lower extending plate parts are sandwiched between the both members.

A longitudinal surface portion of each of the sectionally groove-shaped members and longitudinal surface portions of the side sill opposed thereto may be (i) directly joined or abutted, (ii) joined or abutted via another member, and (iii) opposed to each other with a predetermined gap therebetween without being joined or abutted.

In the impact absorption structure, one of an inner side portion or an outer side portion sandwiching the partition member may extend in a vehicle height direction compared to the other.

A side sill structure of an automobile according to a second aspect of the present invention includes a partition member vertically passing through a closed sectional space in a side sill, the partition member being configured to partition the closed sectional space into two closed sectional spaces in a vehicle width direction, and includes: an impact absorption structure including a sectionally groove-shaped member joined to the partition member and forming a closed sectional space with the partition member in the closed sectional space on a vehicle outer side, and bulkheads provided respectively in the closed sectional space and the closed sectional space on a vehicle inner side in the vehicle width direction to partition the closed sectional space and the closed sectional space, and provided at a plurality of positions at intervals in a vehicle front-rear direction in the closed sectional space and the closed sectional space, wherein each of the bulkheads includes a plurality of bulkhead portions arranged in parallel, and a junction configured to couple the adjacent bulkhead portions between side end portions thereof, the bulkheads in the closed sectional space and the bulkheads in the closed sectional space are provided at same positions in the vehicle front-rear direction in such a manner that at least one each of the junctions are opposed to each other in the vehicle width direction with the partition member being interposed therebetween, and each of the bulkheads in the closed sectional space is joined to at least the sectionally groove-shaped member and each of the bulkheads in the closed sectional space is joined to at least the side sill, a part of bulkhead portions among all the bulkhead portions included in the plurality of bulkheads provided at intervals in the vehicle front-rear direction are arranged in a region that is within a width of a floor cross member in the vehicle front-rear direction, and remaining bulkhead portions are arranged in a region outside the width of the floor cross member in the vehicle front-rear direction, and the two or more bulkhead portions are arranged in the region, and w1 < w2 is satisfied where an interval between the two bulkhead portions adjacent to each other in the region is represented by w1 and an interval between the bulkhead portions and the bulkhead portion adjacent thereto is represented by w2 in the vehicle front-rear direction.

Beads may be formed on a lateral surface portion of the sectionally groove-shaped member in the vehicle width direction, and joining flange portions formed on the bulkhead portions of the bulkheads may be fitted into the beads.

An extending plate part may be continuously provided at each of an upper end and a lower end of the junctions, which are opposed to the partition member, of the bulkheads in the closed sectional space, and in each of upper and lower joint portions between the sectionally groove-shaped member and the partition member, the both members may be joined in a state in which the upper and lower extending plate parts are sandwiched between the both members.

A longitudinal surface portion of the sectionally groove-shaped member and a longitudinal surface portion of the side sill opposed thereto may be (i) directly joined or abutted, (ii) joined or abutted via another member, or (iii) opposed to each other with a predetermined gap therebetween without being joined or abutted.

w1 < w3 may be satisfied where an interval between the adjacent bulkheads is represented by w3 in the vehicle front-rear direction.

Each of w1, w2 and w3 may be 254 mm or less, and w4 may be 254 mm or less where the bulkhead is provided in the region and an interval between the adjacent bulkhead portions of the bulkhead is represented by w4.

The bulkhead portions and the junctions of the bulkheads may be formed of a metal sheet bent and formed in a gate type shape or a rectangular wave shape in plan view.

The partition member and the junctions of the bulkheads opposed thereto may be (i) directly joined or abutted, (ii) joined or abutted via another member, or (iii) opposed to each other with a predetermined gap therebetween without being joined or abutted.

Beads may be formed in the bulkhead portions of the bulkheads.

A concave part may be formed in the impact absorption structure in such a manner as to be opposed to an inner surface of the side sill.

A metal sheet included in the impact absorption structure may have yield strength equal to or less than yield strength of a metal sheet included in the floor cross member.

A metal sheet included in the impact absorption structure may have tensile strength of 780 MPa-grade or more, or a Vickers hardness (HV) of 250 or more at a position of 1/4 of a sheet thickness of the metal sheet.

A metal sheet included in the impact absorption structure may be a steel sheet including in % by mass, C: 0.030% or more and 0.250% or less, Si: 0.01% or more and 2.50% or less, Mn: 1.00% or more and less than 3.50%, P: 0.001% or more and 0.100% or less, S: 0.0200% or less, and Al: 0.010% or more and 2.000% or less.

A metal sheet included in the impact absorption structure may have a microstructure of steel which microstructure includes, at a position of 1/4 of a sheet thickness of the metal sheet, ferrite in an area ratio of 0% or more and 65% or less, martensite and tempered martensite in an area ratio of 30% or more and 100% or less in total, and retained austenite in an area ratio of 0% or more and 15% or less.

A metal sheet included in the impact absorption structure may have ultimate deformability of 0.55 or more in a tensile test.

In a metal sheet included in the impact absorption structure, a limiting bend radius R (mm) at which a crack is not generated when a 90° V-bending test is performed and a sheet thickness t (mm) of the metal sheet may satisfy $R/t \leq 7.0$.

"In a case where two or more first bulkhead portions are arranged in a first region, and an interval between two first bulkhead portions adjacent to each other in the first region is w1 and an interval between the first bulkhead portion and a second bulkhead portion adjacent thereto is w2 in a vehicle front-rear direction, w1 < w2 is satisfied" in the present invention is a condition in which it does not matter whether the two first bulkhead portions having the interval w1 and the first bulkhead portion and the second bulkhead portion having the interval w2 are of the same bulkhead.

Advantageous Effects of Invention

According to a side sill structure of an automobile of the present invention, since a partition member that vertically passes through a closed sectional space in a side sill is used and an impact absorption structure having a specific structure is provided in the closed sectional space, a high collision energy absorption characteristic can be acquired with a small amount of collision deformation. Thus, in a case of application to an automobile including a battery module between both side sills, such as an electric vehicle, there is an advantage that a space required for energy absorption can be reduced and volume of the battery module can be expanded. In addition, since the impact absorption structure can acquire high bending stiffness with minimum necessary components, an increase in weight of a vehicle body due to the components can also be controlled.

Brief Description of Drawings

[FIG. 1] FIG. 1 is a longitudinal sectional view in a vehicle width direction of a side sill, the view schematically illustrating an embodiment of a side sill structure of a first form of the present invention.

[FIG. 2] FIG. 2 is a sectional view taken along a line II-II in FIG. 1.

[FIG. 3] FIG. 3 is a longitudinal sectional view in the vehicle width direction of a vehicle body side portion including the side sill in the embodiment of FIG. 1.

[FIG. 4] FIG. 4 is an exploded view of parts of an embodiment of the side sill structure of the first form of the present invention.

[FIG. 5] FIG. 5 is an explanatory view illustrating a floor panel, a floor cross member, and a battery case arranged between both side sills of a vehicle body of an automobile in an exploded manner.

[FIG. 6] FIG. 6 is a longitudinal sectional view in a vehicle width direction of a side sill, the view schematically illustrating an embodiment of a side sill structure of a second form of the present invention.

[FIG. 7] FIG. 7 is a sectional view taken along a line VII-VII in FIG. 6.

[FIG. 8] FIG. 8 is an explanatory view schematically illustrating a shape example (plane shape) of a bulkhead included in a side sill structure of the present invention.

[FIG. 9] FIG. 9 is a view for describing a width wa of a floor cross member in the present invention.

[FIG. 10] FIG. 10 is an explanatory view illustrating an arrangement form example of a bulkhead in the side sill structure of the first form of the present invention.

[FIG. 11] FIG. 11 is an explanatory view illustrating another arrangement form example of the bulkhead in the side sill structure of the first form of the present invention.

[FIG. 12] FIG. 12 is an explanatory view illustrating another arrangement form example of the bulkhead in the side sill structure of the first form of the present invention.

[FIG. 13] FIG. 13 is an explanatory view illustrating an arrangement form example of a bulkhead in the side sill structure of the second form of the present invention.

[FIG. 14] FIG. 14 is a longitudinal sectional view in the vehicle width direction of the side sill, the view schematically illustrating another embodiment of the side sill structure of the first form of the present invention.

[FIG. 15] FIG. 15 is a view (sectional view of the side sill) for describing a width We of an impact absorption structure A and a width Ws of a side sill 1 in the vehicle width direction with respect to the embodiment of the side sill structure of the first form of the present invention.

[FIG. 16] FIG. 16 is a longitudinal sectional view in the vehicle width direction of the side sill, the view schematically illustrating another embodiment of the side sill structure of the first form of the present invention.

[FIG. 17] FIG. 17 is a longitudinal sectional view in the vehicle width direction of the side sill, the view schematically illustrating another embodiment of the side sill structure of the first form of the present invention.

[FIG. 18] FIG. 18 is a perspective view of a sectionally groove-shaped member 4a on a vehicle outer side as viewed from the outside in another embodiment of the side sill structure of the first form of the present invention.

[FIG. 19] FIG. 19 is a view illustrating a state in which a bulkhead 6 is assembled to the sectionally groove-shaped member 4a of FIG. 18, FIG. 19(a) being a perspective view illustrating the sectionally groove-shaped member 4a in a sectional state in the vehicle width direction, and FIG. 19(b) being a rear view of the sectionally groove-shaped member 4a and the bulkhead 6.

[FIG. 20] FIG. 20 is a view illustrating a state in which the bulkhead 6 is assembled to the sectionally groove-shaped member 4a of FIG. 18, and is a perspective view and a partial sectional view of the sectionally groove-shaped member 4a and the bulkhead 6.

[FIG. 21] FIG. 21 is a longitudinal sectional view in the vehicle width direction of the side sill, the view schematically illustrating another embodiment of the side sill structure of the first form of the present invention.

[FIG. 22] FIG. 22 is a view (sectional view of the side sill) for describing heights (thicknesses) $H_{short}$ and $H_{long}$ of an inner side portion and an outer side portion of the impact absorption structure A in a vehicle height direction with respect to the embodiment of FIG. 21.

[FIG. 23] FIG. 23 is a longitudinal sectional view in the vehicle width direction of the side sill, the view schematically illustrating another embodiment of the side sill structure of the first form of the present invention.

[FIG. 24] FIG. 24 is a view (sectional view of the side sill) for describing a height (thickness) H in the vehicle height direction and a width W in the vehicle width direction of the inner side portion (or outer side portion) of the impact absorption structure A, and a height h in the vehicle height direction and a width (depth) w in the vehicle width direction of a concave part c formed in the inner side portion (or outer side portion) with respect to the embodiment of FIG. 23.

[FIG. 25] FIG. 25 is an explanatory view schematically illustrating a state of deformation at the time of side pole collision in a longitudinal cross section in the vehicle width direction of the side sill structure of the present invention.

[FIG. 26] FIG. 26 is a graph illustrating a relationship between a collision object (pole) intrusion amount and absorbed energy of when the side sill structure of the first form of the present invention is deformed by the side pole collision illustrated in FIG. 25.

[FIG. 27] FIG. 27 is a graph illustrating a relationship between a collision object (pole) intrusion amount and absorbed energy of when the side sill structure of the second form of the present invention is deformed by the side pole collision illustrated in FIG. 25.

[FIG. 28] FIG. 28 is a horizontal sectional view illustrating a side sill structure of a comparative example in which bulkheads 6' each of which includes a single bulkhead portion are provided in closed sectional spaces 5a or 5b in such a manner as to be opposed to each other in a vehicle width direction with a partition member 2 being interposed therebetween (that is, at the same position in a vehicle front-rear direction).

[FIG. 29] FIG. 29 is a graph illustrating a relationship between a collision object (pole) intrusion amount and absorbed energy of when the side sill structure of the comparative example illustrated in FIG. 28 is deformed by the side pole collision similar to that in FIG. 25.

[FIG. 30] FIG. 30 is a view illustrating a result of simulating a deformation behavior of when there is side collision with respect to the side sill structure of the comparative example illustrated in FIG. 28.

Description of Embodiments

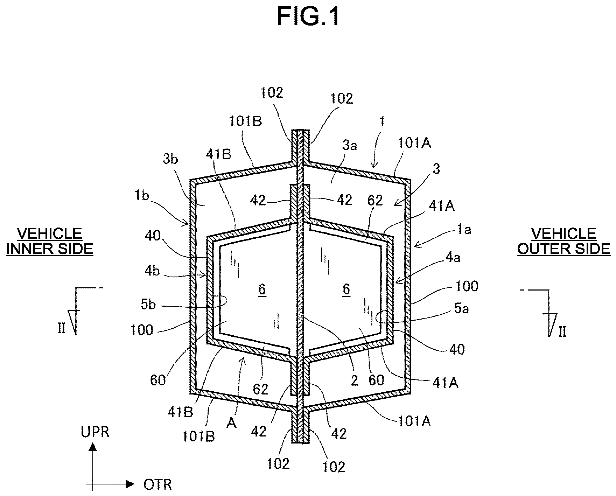

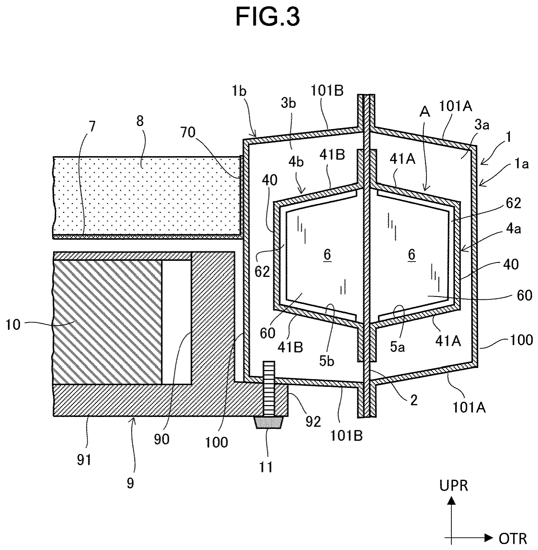

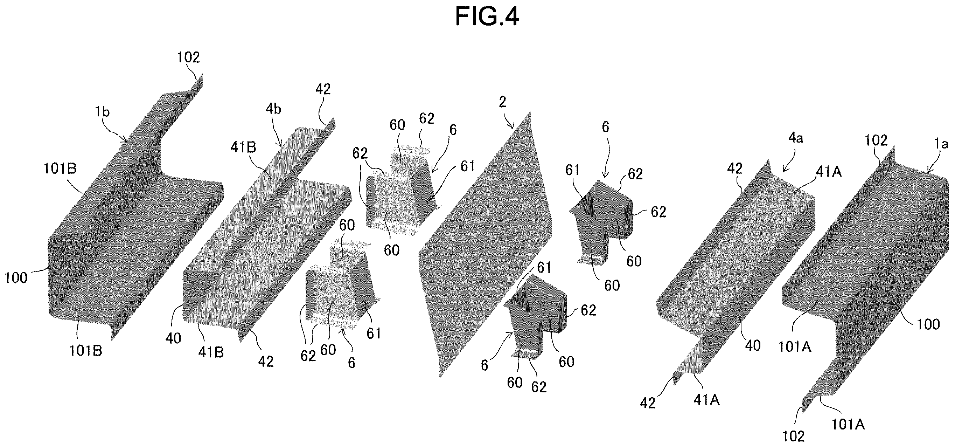

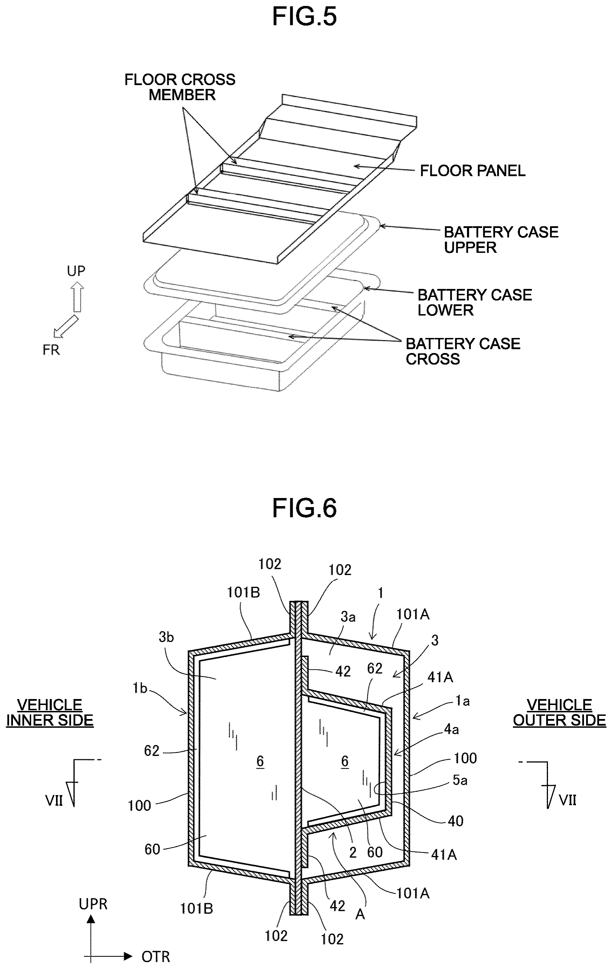

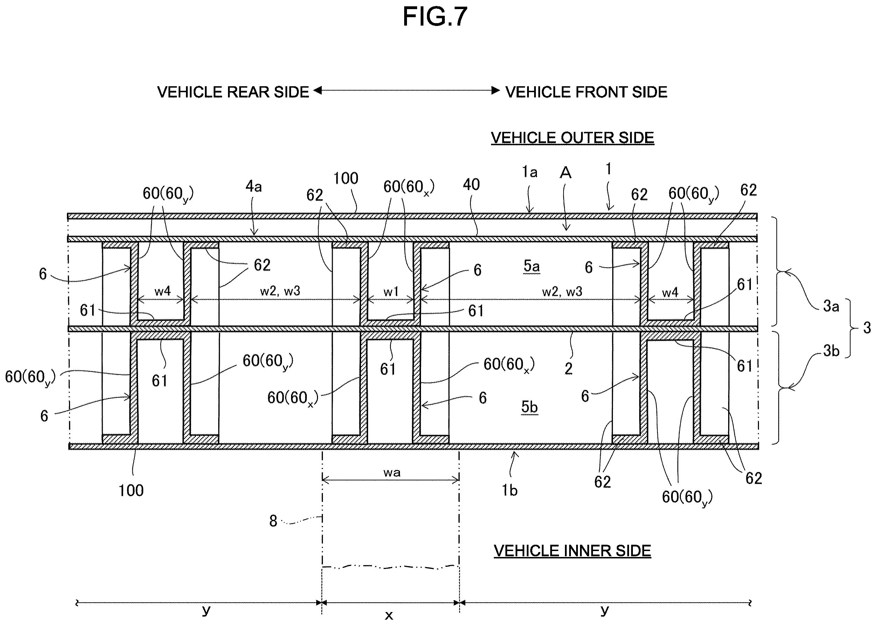

FIG. 1 to FIG. 3 are views schematically illustrating an embodiment of a side sill structure of a first form of the present invention. FIG. 1 is a longitudinal sectional view of the side sill structure in a vehicle width direction, FIG. 2 is a sectional view taken along a line II-II in FIG. 1, and FIG. 3 is a longitudinal sectional view in the vehicle width direction of a vehicle body side structure including a side sill. FIG. 4 is an exploded view of parts the side sill structure of the first form of the present invention, and FIG. 5 is an explanatory view illustrating a floor panel, a floor cross member, and a battery case arranged between both side sills in an exploded manner. FIG. 6 and FIG. 7 are views schematically illustrating an embodiment of a side sill structure of a second form of the present invention. FIG. 6 is a longitudinal sectional view in the vehicle width direction of the side sill structure, and FIG. 7 is a sectional view taken along a line VII-VII in FIG. 6.

<Basic structure of a side sill and a peripheral portion thereof >

A side sill 1 is configured by a side sill outer 1a and a side sill inner 1b having a groove-shaped cross section being joined to each other with a partition member 2 being interposed therebetween. Thus, the side sill structure has a structure in which the partition member 2 vertically passes through a closed sectional space 3 in the side sill 1 and the closed sectional space 3 is partitioned into two closed sectional spaces 3a and 3b in the vehicle width direction by the partition member 2. Details of the side sill structure will be described later. When an underbody structure of an automobile including the side sill will be described with reference to FIG. 3, the side sill 1 is a frame structure member arranged on each of both sides of the underbody, and a floor panel 7 is arranged between the both side sills 1. The floor panel 7 is joined to both the side sills 1 (upper portions of longitudinal surface portions 100 of the side sill inners 1b in FIG. 3) via both flange portions 70 thereof. Furthermore, floor cross members 8 that are frame structure members in the vehicle width direction are arranged on the floor panel 7, and both ends thereof are joined (fixed) to both the side sills 1 (upper portions of the longitudinal surface portions 100 of the side sill inners 1b in FIG. 3) via the floor panel 7 (flange portions 70). The floor cross members 8 are provided at a plurality of positions at predetermined intervals (for example, about 300 mm) in the vehicle front-rear direction. The joining (fixing) of the floor panel 7 and the floor cross members 8 to the side sills 1 described above is usually performed by spot welding.

A battery case 9 that houses a battery pack 10 is arranged below the floor panel 7, and side portions (battery case side members 90) of the battery case 9 are opposed to lower portions of the side sills 1 (lower portions of the longitudinal surface portions 100 of the side sill inners 1b) at a predetermined interval. Mounting flange portions 92 are continuously provided in a bottom portion of the battery case 9 (battery case bottom plate 91) in such a manner as to protrude toward sides of the side sills. The mounting flange portions 92 and lower ends of the side sills 1 (lateral surface portions 101B on the lower side of the side sill inners 1b) are fastened with fixing bolts 11, whereby the battery case 9 is held by the side sills 1. With such a structure, a load input to the side sills 1 at the time of side collision is input to both the floor cross members 8 and the battery case 9. As a result, it is possible to receive the load in a wide range, and the load is input to the floor cross members 8 prior to the battery case 9 and the load input to the battery case 9 is reduced.

The side sill outer 1a and the side sill inner 1b included in each of the side sills 1 are configured by forming of a metal sheet, and each includes a main body portion having a groove-shaped cross section and including a longitudinal surface portion 100 and lateral surface portions 101A or 101B coupled to upper and lower ends thereof, and flange portions 102 respectively coupled to both ends thereof (end portions of the lateral surface portions 101A or 101B). The longitudinal surface portion 100 may not be perpendicular and may have an appropriate inclination or curved surface. In addition, the lateral surface portions 101A and 101B do not have to be horizontal, and may have an appropriate inclination or curved surface. The partition member 2 is also formed of a metal sheet, does not need to be completely flat, and may be formed by bending of a flat sheet.

The flange portions 102 of the side sill outer 1a and the side sill inner 1b are overlapped and joined (usually joined by spot welding), whereby the side sill 1 an inside of which is the closed sectional space 3 is formed. In this case, the partition member 2 is interposed (sandwiched) between the side sill outer 1a and the side sill inner 1b, and the flange portions 102 of the side sill outer 1a and the side sill inner 1b are joined together with upper and lower end portions of the partition member 2 sandwiched therebetween. As a result, the partition member 2 vertically passes through the closed sectional space 3 in the side sill 1, and the closed sectional space 3 is partitioned into the two closed sectional spaces 3a and 3b in the vehicle width direction by the partition member 2. The upper and lower end portions of the partition member 2 are joined to upper and lower ends of a side sill main body (flange portions 102 of the side sill outer 1a and the side sill inner 1b). Thus, high yield strength that controls collapse of the side sill 1 due to upward and downward opening of a cross section thereof (controls cross-section collapsing) at the time of the side collision is acquired, which contributes to improvement of a collision characteristic.

<Impact absorption structure A included in the side sill structure>

In the side sill structure in the above manner, the present invention is characterized by utilization of the partition member 2 that vertically passes through the closed sectional space 3 in the side sill 1, and provision of the impact absorption structure A having a specific structure in the closed sectional space 3. First, the side sill structure of the first form of the present invention illustrated in FIG. 1 to FIG. 4 will be described. This side sill structure is characterized by provision of an "impact absorption structure A which includes a pair of sectionally groove-shaped members 4a and 4b joined to each other while sandwiching a partition member 2 from both sides in a closed sectional space 3 of a side sill 1, and a plurality of bulkheads 6 having a specific structure and arrangement form and installed in two closed sectional spaces 5a and 5b formed between the sectionally groove-shaped members 4a and 4b and the partition member 2, and in which these are structurally integrated". As a result, it is possible to acquire a side sill structure capable of acquiring a high collision energy absorption characteristic with a small collision deformation amount. Moreover, the impact absorption structure A can acquire high bending stiffness with minimum necessary components (specifically, minimum number of bulkheads to be installed), whereby an increase in weight of the vehicle body due to the components can also be controlled. The impact absorption structure A is provided at least in a portion, which is along the battery case side member 90, of the side sill in the vehicle front-rear direction.

The sectionally groove-shaped members 4a and 4b are formed by bend-forming of a metal sheet, and each thereof includes a cross-sectional groove-shaped main body portion including a longitudinal surface portion 40 and lateral surface portions 41A or 41B coupled to upper and lower ends thereof, and flange portions 42 respectively coupled to both ends thereof (end portions of lateral surface portions 41A or 41B). In each of the sectionally groove-shaped members 4a and 4b, the longitudinal surface portion 40 is included in a pressure receiving surface portion that receives a side collision load, and the lateral surface portions 41A and 41B are included in energy absorption surface portions that are deformed by the side collision load and absorb collision energy. The flange portions 42 may be formed (for example, formed at predetermined intervals) only on a part in the longitudinal direction of the sectionally groove-shaped members 4a and 4b. The sectionally groove-shaped members 4a and 4b are arranged in the vehicle front-rear direction (side sill longitudinal direction) in the closed sectional spaces 3a and 3b, are joined (usually joined by spot welding) to the partition member 2 via the respective flange portions 42 in a state of sandwiching the partition member 2 from both sides, and respectively form the closed sectional spaces 5a and 5b with the partition member 2.

The bulkheads 6 are members that partition the closed sectional spaces 5a and 5b by being provided in the vehicle width direction in the closed sectional spaces 5a and 5b, and are provided at a plurality of positions with intervals in the vehicle front-rear direction in the closed sectional spaces 5a and 5b. The bulkheads 6 are preferably provided in such a manner as to partition entire cross sections in the vehicle width direction of the closed sectional spaces 5a and 5b. The bulkheads 6 control the cross-section collapsing of the sectionally groove-shaped members 4a and 4b in cooperation with the partition member 2 at the time of the side collision, and the bulkheads 6 themselves are buckled, and bent and crushed to absorb the collision energy. Each of the bulkheads 6 includes a plurality of bulkhead portions 60 (bulkhead portions) arranged in parallel, and has a structure in which side end portions of the adjacent bulkhead portions 60 are coupled by a junction 61. The bulkhead 6 of the present embodiment is formed in a plane gate type shape by coupling of side end portions of the two bulkhead portions 60 arranged in parallel by the junction 61.

The bulkhead 6 in the closed sectional space 5a and the bulkhead 6 in the closed sectional space 5b are provided to be opposed to each other in the vehicle width direction with the partition member 2 being interposed therebetween at the same position in the vehicle front-rear direction in such a manner that at least one each of the junctions 61 are opposed to each other in the vehicle width direction with the partition member 2 being interposed therebetween. There is only one junction 61 located on a side of the partition member 2 in each of the bulkheads 6 of the present embodiment, and the junctions 61 are provided at the same position in the vehicle front-rear direction in such a manner as to be opposed to each other in the vehicle width direction with the partition member 2 being interposed therebetween (specifically, line-symmetrically with the partition member 2 as a symmetry axis in plan view). As a result, a function of maintaining cross-sectional shapes of the outer side portion and the inner side portion of the impact absorption structure A can be appropriately exhibited, and the high collision energy absorption characteristic can be acquired. Furthermore, a load transfer path through which a collision load from the side sill outer 1a is transferred from the bulkheads 6 opposed to each other in the vehicle width direction with the partition member 2 interposed therebetween to the floor cross members 8 and the battery case side member 90 via the side sill inner 1b is formed. Then, the side sill 1 and the impact absorption structure A are crushed by reaction force from the floor cross members 8 and the battery case side member 90, whereby the collision energy is absorbed.

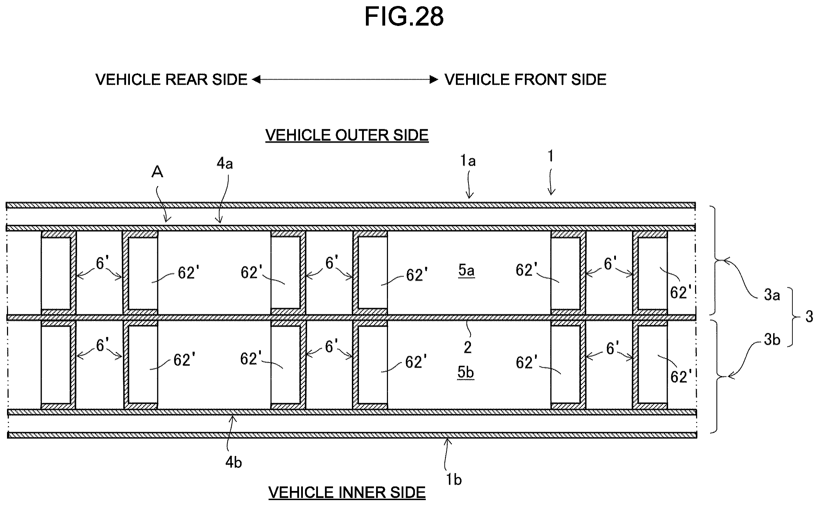

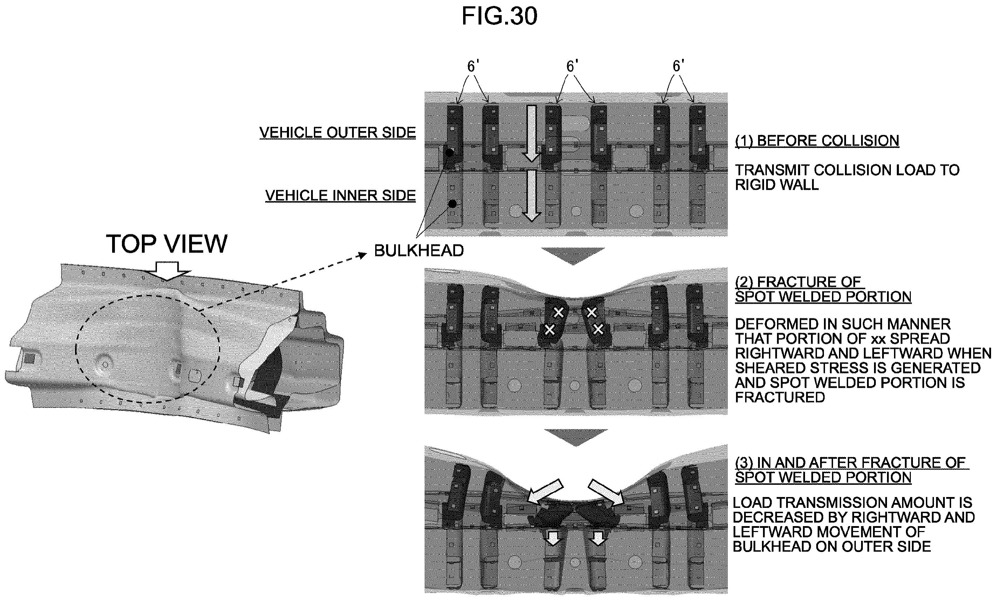

In the present invention, a reason why the "bulkhead 6 which includes a plurality of bulkhead portions 60 arranged in parallel and in which side end portions of the adjacent bulkhead portions 60 are coupled by a junction 61" is provided instead of a plurality of bulkheads each of which includes a single bulkhead portion will be described. FIG. 28 (horizontal sectional view of the side sill) is a view illustrating a side sill structure in which a plurality of bulkheads 6' each of which has a single bulkhead portion is provided in closed sectional spaces 5a and 5b in such a manner as to be opposed to each other in the vehicle width direction with a partition member 2 being interposed therebetween (that is, at the same position in the vehicle front-rear direction). FIG. 30 is view illustrating a simulation of a deformation behavior of such a side sill structure of when there is side collision. From a result of this simulation, the following problems have become clear. That is, at an initial stage of deformation by the side collision, sheared stress (shear stress) is generated in a spot welded portion between flange portions 62' of an outer peripheral edge of the bulkheads 6' in a closed sectional space 5a (vehicle outer side) and a sectionally groove-shaped member 4a. When a fracture is generated in the spot welded portion due to the sheared stress, as illustrated in FIG. 30, the bulkheads 6' (outer side) may be deformed in such a manner that portions on a partition member side thereof spread rightward and leftward (vehicle front-rear direction). When such deformation (deformation in which the bulkheads 6' on the vehicle body outer side move rightward and leftward) is generated, a positional displacement in the vehicle front-rear direction is generated between the bulkhead 6' in the closed sectional space 5a and the bulkhead 6' in the closed sectional space 5b. As a result, a load transfer path formed by the bulkheads 6' in the closed sectional spaces 5a and 5b opposed to each other in the vehicle width direction with the partition member 2 being interposed therebetween is impaired. As a result, a load transfer amount by the load transfer path decreases, and the collision energy absorption property decreases.

On the other hand, when the "bulkhead 6 which includes a plurality of bulkhead portions 60 arranged in parallel and in which side end portions of the adjacent bulkhead portions 60 are coupled by a junction 61" is provided as in the present invention, at the initial stage of the deformation by the side collision, the deformation of the bulkheads 6 in a manner illustrated in FIG. 30 (deformation in which portions on the partition member side of the two bulkheads 6 spread rightward and leftward), that is, the deformation (movement) in which the adjacent bulkhead portions 60 of the bulkhead 6 in the closed sectional space 5a spread rightward and leftward (vehicle front-rear direction) is not generated. As a result, since the load transfer path of the collision load from the side sill outer 1a to the floor cross members 8 and the battery case side member 90 by the bulkheads 6 in the closed sectional spaces 5a and 5b can be maintained, the high collision energy absorption property by the side sill 1 and the impact absorption structure A can be maintained.

Each of the bulkheads 6 is configured by forming of a metal sheet, and outer edge portions of the bulkhead portions 60 thereof are joined to at least the sectionally groove-shaped member 4a or the sectionally groove-shaped member 4b, and more preferably, the junction 61 (or extending plate part 63 described later) is also joined to the partition member 2. In the present embodiment, the flange portions 62 are formed at outer edge portions of the bulkhead portions 60 of the bulkhead 6, and joining to the sectionally groove-shaped member 4a or the sectionally groove-shaped member 4b via the flange portions 62 is performed, and the junction 61 is further joined to the partition member 2. Usually, this joining is performed by spot welding. The flange portions 62 may be formed only in a part of the outer edge portions of the bulkhead portions 60 (for example, intermittently formed at predetermined intervals). The bulkheads 6 may be provided at equal intervals in the vehicle front-rear direction in the closed sectional spaces 5a and 5b, may be provided, for example, in such a manner that wide intervals and narrow intervals are alternately provided, or may be provided at different intervals respectively in regions in the vehicle front-rear direction as described later.

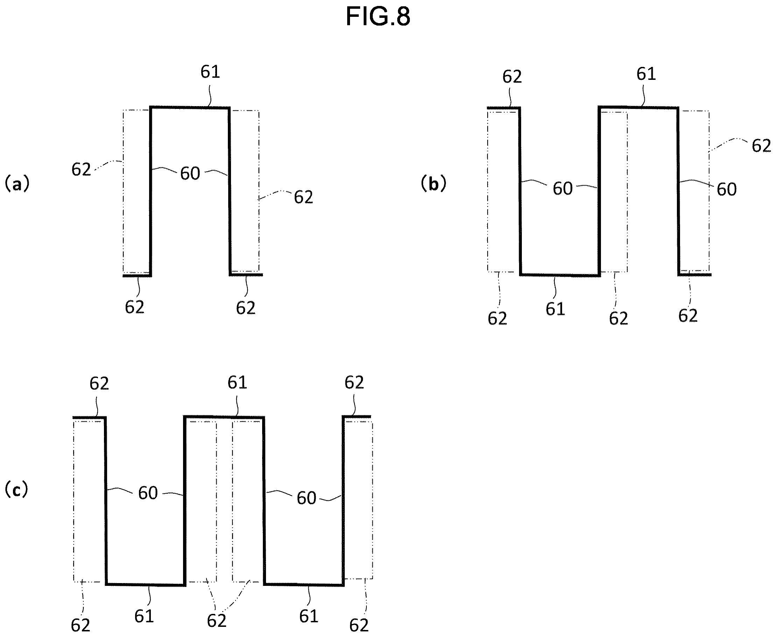

FIG. 8 is a view illustrating a shape example of the bulkheads 6, and schematically illustrating plane shapes of the bulkheads. FIG. 8(a) is a view illustrating a bulkhead of the embodiment of FIG. 1 to FIG. 3, the bulkhead being configured in a plane gate type shape including two bulkhead portions 60 arranged in parallel and a junction 61 that performs coupling thereof between side end portions thereof. The bulkhead portions 60 and the junction 61 of the bulkhead 6 are formed by bending of one metal sheet into a gate type shape in plan view. In addition, bulkheads 6 in FIGS. 8(b, c) are configured in a plane square wave shape (square wave shape) including three or four bulkhead portions 60 arranged in parallel and a junction 61 coupling the adjacent bulkhead portions 60 between side end portions thereof. The bulkhead portions 60 and the junction 61 of these bulkheads 6 are formed by bending of one metal sheet into a square wave shape (square wave shape) in plan view. In any of FIGS. 8(a) to (c), flange portions 62 are formed on outer edge portions of the bulkhead portions 60 by bending of a part of the metal sheet.

In the present invention, in order to reduce weight of a vehicle body while minimizing the number of installed bulkheads 6 themselves or bulkhead portions 60 thereof and improving the collision characteristic, the bulkhead portions 60 of the plurality of bulkheads 6 provided at intervals in the vehicle front-rear direction are arranged under the following condition. In the side sill structure of the present invention, as illustrated in FIG. 2, among all the bulkhead portions 60 included in the plurality of bulkheads 6 provided at intervals in the vehicle front-rear direction, some bulkhead portions $60_x$ are arranged in a region x within a width wa of the floor cross members 8 in the vehicle front-rear direction, and the remaining bulkhead portions $60_y$ are arranged in a region y outside the width of the floor cross members 8 in the vehicle front-rear direction. Thus, in the present invention, two or more bulkhead portions $60_x$ (two bulkhead portions $60_x$ in the present embodiment) are arranged in the region x within the width wa of the floor cross member. Furthermore, in the vehicle front-rear direction, in a case where an interval between the two bulkhead portions $60_x$ adjacent to each other in the region x is w1 and an interval between the bulkhead portion $60_x$ and the bulkhead portion $60_y$ adjacent thereto (bulkhead portion 60 arranged in the region y) is w2, $w1 < w2$ is satisfied. Under this condition, it does not matter whether the two bulkhead portions $60_x$ having the interval w1 and the bulkhead portion $60_x$ and the bulkhead portion $60_y$ having the interval w2 are of the same bulkhead 6. As illustrated in FIG. 2, the intervals w1 and w2 are not distances between cores of the bulkhead portions 60 but distances between opposed surfaces of the bulkhead portions 60.

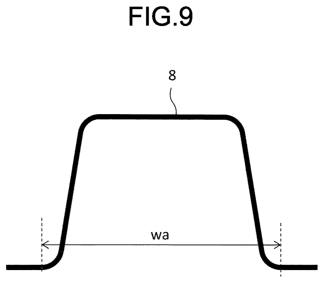

A reason why the bulkhead portions 60 are arranged in such a form is to improve the collision characteristic by making the bulkhead portions $60_x$ arranged at two or more positions and reducing the interval between the bulkhead portions $60_x$ in the region x within the width wa of the floor cross members 8, and to control the number of arranged bulkhead portions 60 (bulkhead portions $60_y$) and to reduce the weight by increasing the interval between the bulkhead portions $60_x$ and the bulkhead portions $60_y$ in the other region y. The width wa of the floor cross members 8 may be a width of a portion between both side wall portions in a floor cross member width direction. FIG. 9 is a view schematically illustrating a cross section in the width direction of a general floor cross member 8. In a case of the floor cross member 8 having flange portions at both edge portions as illustrated in FIG. 9, a width wa of the floor cross member 8 may be a width of a portion excluding the flange portions at both edge portions (width of a main portion functioning as a frame member), that is, a width between positions where R of the flange portions starts in the width direction of the floor cross member.

As described above, the impact absorption structure A is installed in the closed sectional space 3 in the side sill 1 by utilization of the partition member 2, and has a structure in which the pair of sectionally groove-shaped members 4a and 4b joined to each other while sandwiching the partition member 2 from both sides, and the bulkheads 6 having a specific structure and arrangement form and installed in the closed sectional spaces 5a and 5b in the sectionally groove-shaped members 4a and 4b are integrated together with the partition member 2. In other words, the sectionally groove-shaped members 4a and 4b provided via the partition member 2 enclose the bulkheads 6 having the specific structure and arrangement form and arranged at intervals in the vehicle front-rear direction, and these are integrated in the structure. As a result, it is possible to acquire a high impact energy absorption characteristic (described later) while controlling an increase in weight by minimizing the number of arranged bulkhead portions 60 of the bulkhead 6.

Next, a side sill structure of a second form of the present invention illustrated in FIG. 6 and FIG. 7 will be described. This side sill structure is characterized by provision of the "impact absorption structure A including: a sectionally groove-shaped member 4a that is joined to a partition member 2 and that forms a closed sectional space 5a with the partition member 2 in a closed sectional space 3a on a vehicle outer side; and a plurality of bulkheads 6 that has a specific structure and an arrangement form and that is installed in a closed sectional space 5 and a closed sectional space 3b on a vehicle inner side, in which these are structurally integrated". As a result, similarly to the side sill structure of the first form of the present invention described above, it is possible to acquire a side sill structure capable of acquiring the high collision energy absorption characteristic with a small amount of collision deformation. Moreover, the impact absorption structure A can acquire high bending stiffness with minimum necessary components (specifically, minimum number of bulkheads to be installed), whereby an increase in weight of the vehicle body due to the components can also be controlled. A configuration of the sectionally groove-shaped member 4a is similar to that of the side sill structure of the first form of the present invention described above. The sectionally groove-shaped member 4a is joined (usually joined by spot welding) to the partition member 2 via a flange portion 42, and forms the closed sectional space 5a with the partition member 2. In this side sill structure, no sectionally groove-shaped member is provided on the vehicle inner side.

The bulkheads 6 are provided at a plurality of positions at intervals in the vehicle front-rear direction in the closed sectional space 5a on the vehicle outer side, and are provided at a plurality of positions at intervals in the vehicle front-rear direction in the closed sectional space 3b on the vehicle inner side. These bulkheads 6 are members that partition the closed sectional space 5a and the closed sectional space 3b by being provided in the vehicle width direction, and are preferably provided in such a manner as to partition the entire cross sections of the closed sectional space 5a and the closed sectional space 3b in the vehicle width direction. The bulkheads 6 control the cross-section collapsing of the sectionally groove-shaped member 4a and the side sill inner 1b in cooperation with the partition member 2 at the time of side collision, and the bulkheads 6 themselves are buckled, and are bent and crushed to absorb collision energy. A configuration of each of the bulkheads 6 is similar to that of the side sill structure of the first form of the present invention described above.

The bulkhead 6 in the closed sectional space 5a and the bulkhead 6 in the closed sectional space 3b are provided to be opposed to each other in the vehicle width direction with the partition member 2 being interposed therebetween at the same position in the vehicle front-rear direction in such a manner that at least one each of junctions 61 is opposed to each other in the vehicle width direction with the partition member 2 being interposed therebetween. There is only one junction 61 located on a side of the partition member 2 in each of the bulkheads 6 of the present embodiment, and the junctions 61 are provided at the same position in the vehicle front-rear direction in such a manner as to be opposed to each other in the vehicle width direction with the partition member 2 being interposed therebetween. As a result, a function of maintaining cross-sectional shapes of the outer side portion and the inner side portion of the impact absorption structure A can be appropriately exhibited, and the high collision energy absorption characteristic can be acquired. Furthermore, a load transfer path through which a collision load from the side sill outer 1a is transferred from the bulkheads 6 opposed to each other in the vehicle width direction with the partition member 2 interposed therebetween to the floor cross members 8 and the battery case side member 90 via the side sill inner 1b is formed. Then, the side sill 1 and the impact absorption structure A are crushed by reaction force from the floor cross members 8 and the battery case side member 90, whereby the collision energy is absorbed.

In the present invention, a reason why the "bulkhead 6 which includes a plurality of bulkhead portions 60 arranged in parallel and in which side end portions of the adjacent bulkhead portions 60 are coupled by a junction 61" is provided instead of the plurality of bulkheads including the single bulkhead portion is similar to that of the side sill structure of the first form of the present invention described above. Outer edge portions of the bulkhead portions 60 of the bulkhead 6 in the closed sectional space 5a are joined to at least the sectionally groove-shaped member 4a, and outer edge portions of the bulkhead portions 60 of the bulkhead 6 in the closed sectional space 3b are joined to at least the side sill inner 1b. More preferably, the junction 61 (or extending plate part 63 described later) of each of the bulkheads 6 is also joined to the partition member 2. In the present embodiment, the flange portions 62 are formed at the outer edge portions of the bulkhead portions 60 of the bulkhead 6, joining to the sectionally groove-shaped member 4a or the side sill inner 1b is performed via the flange portions 62, and the junction 61 is joined to the partition member 2. An arrangement condition of each of the bulkheads 6 is similar to that of the side sill structure of the first form of the present invention described above. In addition, other configurations of the present embodiment are similar to those of the side sill structure of the first form of the present invention described above.

As described above, the impact absorption structure A is installed in the closed sectional space 3 in the side sill 1 by utilization of the partition member 2, and has a structure in which the sectionally groove-shaped member 4a that is joined to the partition member 2 and that forms the closed sectional space 5a with the partition member 2 and the bulkheads 6 having a specific structure and arrangement form and installed in the closed sectional space 5a and the closed sectional space 3b on the vehicle inner side are integrated together with the partition member 2. In other words, the bulkheads 6 having the specific structure and arrangement form and arranged at intervals in the vehicle front-rear direction are enclosed by the sectionally groove-shaped member 4a provided via the partition member 2 on the vehicle outer side, and are enclosed by the side sill inner 1b on the vehicle inner side, and these are integrated in the structure. As a result, it is possible to acquire a high impact energy absorption characteristic (described later) while controlling an increase in weight by minimizing the number of arranged bulkhead portions 60 of the bulkhead 6.

<Function/effect of the impact absorption structure A>

The impact absorption structure A included in the side sill structure of the first form of the present invention has the structure in which the sectionally groove-shaped members 4a and 4b joined to each other while sandwiching the partition member 2 from the both sides, and the bulkheads 6 having the specific structure and arrangement form and installed in the closed sectional spaces 5a and 5b inside the sectionally groove-shaped members 4a and 4b are integrated together with the partition member 2. In other words, the sectionally groove-shaped members 4a and 4b provided via the partition member 2 enclose the bulkheads 6 having the specific structure and arrangement form, and have the structure in which these are integrated. With such a structure, the entire impact absorption structure A has high bending stiffness (bending deformation resistance against a side collision load). Thus, local deformation around an input position of the side collision load is controlled, and the entire impact absorption structure A is deformed at the time of side collision, whereby collision energy absorption (EA) can be improved.

At the time of the side collision, the longitudinal surface portion 40 (pressure receiving surface portion) of the sectionally groove-shaped member 4a on the outer side receives the collision load via the side sill outer 1a, and the lateral surface portion 41A (energy absorption surface portion) and the lateral surface portion 101A (energy absorption surface portion) of the side sill outer 1a are bent and crushed first and absorb collision energy. Then, the lateral surface portion 41B (energy absorption surface portion) of the sectionally groove-shaped member 4b on the inner side and the lateral surface portion 101B (energy absorption surface portion) of the side sill inner 1b are bent and crushed, and absorb the collision energy. At this time, the bulkheads 6 integrated with the sectionally groove-shaped members 4a and 4b control the cross-sectional collapsing of the sectionally groove-shaped members 4a and 4b in cooperation with the partition member 2, and the bulkheads 6 themselves are buckled (axially crushed) and absorb the collision energy. Furthermore, the partition member 2 integrated with the sectionally groove-shaped members 4a and 4b is also bent and deformed and absorbs the collision energy. In addition, in the impact absorption structure A, since the bulkheads 6 are individually installed with the partition member 2 being interposed (that is, the bulkheads 6 are divided by the partition member 2 in the vehicle width direction), a wavelength of buckling is short, and load capacity of the bulkhead 6 can be improved.

Furthermore, by the arrangement of the "bulkhead 6 which includes a plurality of bulkhead portions 60 arranged in parallel and in which side end portions of the adjacent bulkhead portions 60 are coupled by a junction 61" as the bulkhead 6, the following effect can be acquired. That is, in the initial stage of the deformation by the side collision, deformation of the bulkheads 6' (deformation in which the portions on the partition member side of the two bulkheads 6' spread rightward and leftward) in the manner illustrated in FIG. 30, that is, deformation (movement) in which the adjacent bulkhead portions 60 of the bulkheads 6 in the closed sectional space 5a spread rightward and leftward (vehicle front-rear direction) is not generated. Thus, since the load transfer path of the collision load from the side sill outer 1a to the floor cross members 8 and the battery case side member 90 by the bulkheads 6 in the closed sectional spaces 5a and 5b can be maintained, the high collision energy absorption property by the side sill 1 and the impact absorption structure A can be maintained.

On the other hand, the two or more bulkhead portions $60_x$ are arranged in the region x within the width wa of the floor cross members, and the interval w1 between the two bulkhead portions $60_x$ adjacent to each other in the region x and the interval w2 between the bulkhead portion $60_x$ and the bulkhead portion $60_y$ adjacent thereto are set to satisfy w1 < w2, whereby the collision characteristic can be improved while the weight of the vehicle body is reduced. That is, in the region x within the width wa of the floor cross members 8, it is possible to improve the collision characteristic by arranging the bulkhead portions $60_x$ at two or more positions and reducing the interval between the bulkhead portions $60_x$, and to reduce the weight of the vehicle body by increasing the interval between the bulkhead portions $60_x$ and the bulkhead portions $60_y$ in the other region y and controlling the number of arranged bulkhead portions 60 (bulkhead portions $60_y$).

In addition, the impact absorption structure A included in the side sill structure of the second form of the present invention has the structure in which the sectionally groove-shaped member 4a that is joined to the partition member 2 and that forms the closed sectional space 5a with the partition member 2, and the bulkheads 6 that have the specific structure and arrangement form and that are installed in the closed sectional space 5a and the closed sectional space 3b on the vehicle inner side are integrated together with the partition member 2. In other words, the bulkheads 6 having the specific structure and arrangement form are enclosed by the sectionally groove-shaped member 4a provided via the partition member 2 on the vehicle outer side, and are enclosed by the side sill inner 1b on the vehicle inner side, and these are integrated in the structure. With such a structure, the entire impact absorption structure A has high bending stiffness (bending deformation resistance against a side collision load). Thus, local deformation around an input position of the side collision load is controlled, and the entire impact absorption structure A is deformed at the time of side collision, whereby collision energy absorption (EA) can be improved.

At the time of the side collision, the longitudinal surface portion 40 (pressure receiving surface portion) of the sectionally groove-shaped member 4a on the outer side receives the collision load via the side sill outer 1a, and the lateral surface portion 41A (energy absorption surface portion) and the lateral surface portion 101A (energy absorption surface portion) of the side sill outer 1a are bent and crushed first and absorb the collision energy. Then, the lateral surface portion 101B (energy absorption surface portion) of the side sill inner 1b is bent and crushed, and absorbs the collision energy. At this time, the bulkheads 6 integrated with the sectionally groove-shaped member 4a and the side sill inner 1b control the cross-section collapsing of the sectionally groove-shaped member 4a and the side sill inner 1b in cooperation with the partition member 2, and the bulkheads 6 themselves are buckled (axially crushed) and absorb the collision energy. Furthermore, the partition member 2 integrated with the sectionally groove-shaped member 4a and the side sill inner 1b is also bent and deformed, and absorbs the collision energy. In addition, in the impact absorption structure A, since the bulkheads 6 are individually installed with the partition member 2 being interposed (that is, the bulkheads 6 are divided by the partition member 2 in the vehicle width direction), a wavelength of buckling is short, and load capacity of the bulkheads 6 can be improved. Furthermore, by the arrangement of the "bulkhead 6 which includes a plurality of bulkhead portions 60 arranged in parallel and in which side end portions of adjacent bulkhead portions 60 are coupled by a junction 61" as the bulkhead 6, an effect similar to that of the side sill structure of the first form of the present invention can be acquired.

<Preferred condition and other embodiments of the impact absorption structure A>

Hereinafter, although preferred conditions and other embodiments of the impact absorption structure A will be described mainly with the side sill structure of the first form of the present invention as an example, these are basically conditions and embodiments applicable to the side sill structure of the second form of the present invention. For example, as long as related to the sectionally groove-shaped members 4a and 4b, the closed sectional spaces 5a and 5b, and the bulkheads 6 arranged inside thereof in the side sill structure of the first form of the present invention, the configurations of the sectionally groove-shaped member 4a, the closed sectional space 5a, and the bulkheads 6 inside thereof can be applied to the side sill structure of the second form of the present invention. Thus, the preferred conditions and embodiments described below are common to the side sill structures of the first and second forms of the present invention, unless otherwise noted. In order to reduce the number of installed bulkheads 6 (bulkhead portions $60_y$) and to reduce the weight of the vehicle body while securing the collision characteristic, an installation condition of the bulkheads 6 and an arrangement condition of the bulkhead portions 60 are preferably as follows. That is, in a case where an interval between the bulkheads 6 adjacent to each other in the vehicle front-rear direction is w3, the interval w3 is also preferably set to satisfy w1 < w3. In this condition, an installation region (regions x and y) of the bulkheads 6 is not limited. In addition, in a case where the bulkhead 6 is provided in the region y and an interval between the adjacent bulkhead portions $60_y$ in the bulkhead 6 is w4, the interval w4 preferably satisfies w1 ≤ w4. As illustrated in FIG. 2, the intervals w3 and w4 are not distances between cores of the bulkheads 6 and the bulkhead portions 60 but distances in opposed surfaces between the bulkheads 6 or the bulkhead portions 60.

The interval w1 is preferably 254 mm or less in order to secure the bending stiffness of the impact absorption structure A at the time of the side collision. On the other hand, although being preferably as wide as possible from a viewpoint of weight reduction of the impact absorption structure A, the intervals w2 to w4 are also preferably 254 mm or less in order to secure the bending stiffness of the impact absorption structure A at the time of the side collision. This 254 mm is a diameter of a collision (impact) object (pole) used in a side collision test (side pole collision (side pole impact) test prescribed in European New Car Assessment Program (Euro NCAP)). By setting the intervals w1 to w4 to be equal to or less than the diameter of the collision object (pole) in this test, it is possible to more appropriately secure the bending stiffness of the impact absorption structure A at the time of the side collision.

From a similar viewpoint, the intervals w2 and w3 are preferably about 1/4 to 1/2 of an installation interval of the floor cross members 8 (interval wb between the adjacent floor cross members 8). For example, in a case where the installation interval wb of the floor cross members 8 is 260 mm, the intervals w2 and w3 are preferably about 65 mm to 130 mm. In addition, from the viewpoint of weight reduction of the impact absorption structure A, the intervals w2 and w3 are preferably 50 mm or more. In addition, when the interval w1 is excessively small, the effect of improving the collision characteristic within the width wa of the floor cross members 8 is decreased, or the number of installed bulkhead portions $60_x$ is unnecessarily increased, which is not preferable. Thus, it is preferable that the bulkhead portions $60_x$ are arranged in such a manner that a ratio w1/wa of the interval w1 to the width wa of the floor cross members 8 is 0.4 or more and 1.0 or less.

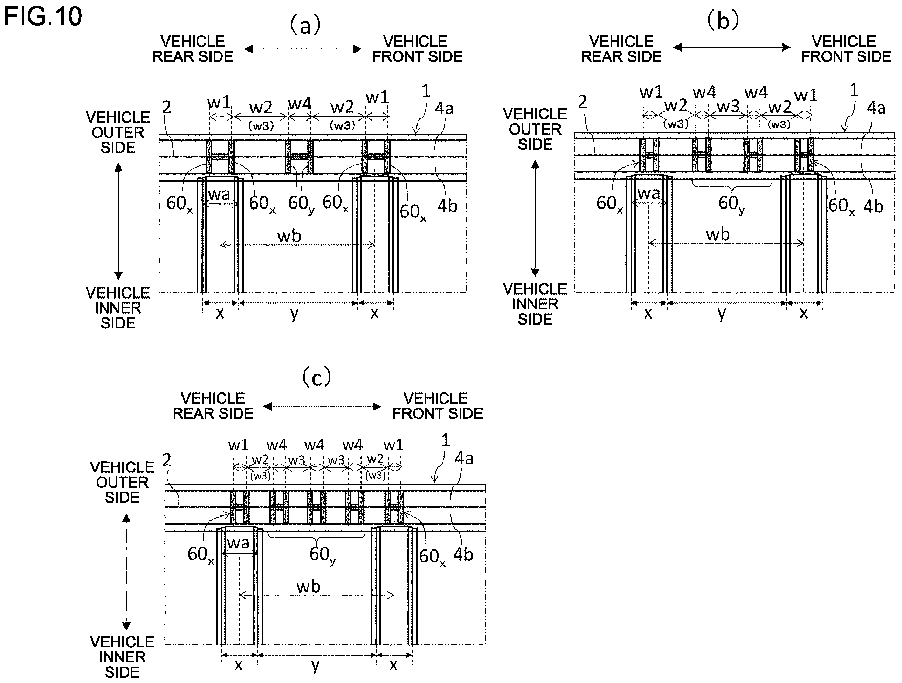

FIG. 10 to FIG. 12 are views illustrating an arrangement form example of bulkheads 6 in the vehicle front-rear direction in the side sill structure of the first form of the present invention. The bulkheads 6 are provided at a plurality of positions at intervals in the vehicle front-rear direction. Entire bulkhead portions 60 included in the bulkheads 6 include bulkhead portions $60_x$ arranged in a region x within a width wa of floor cross members 8 in the vehicle front-rear direction and bulkhead portions $60_y$ arranged in the other region y (region outside the width of the floor cross members 8). In the region x, the two or more bulkhead portions $60_x$ are arranged. In FIGS. 10(a) to (c), a "bulkhead 6 having a plane gate type shape and including two bulkhead portions 60 arranged in parallel" illustrated in FIG. 8(a) is arranged in each of the regions x and y. In FIG. 10(a), the two bulkhead portions $60_x$ are arranged by the arrangement of the one bulkhead 6 in the region x. The one bulkhead 6 (thus, two bulkhead portions $60_y$) is arranged in the region y. This arrangement example satisfies w1 < w3 and w1 ≤ w4 in addition to the condition of w1 < w2.

Also in FIG. 10(b), the two bulkhead portions $60_x$ are arranged by the arrangement of the one bulkhead 6 in the region x. In order to further improve bending stiffness of an impact absorption structure A between floor cross members 8, the two bulkheads 6 (thus, four bulkhead portions $60_y$) are arranged in the region y. This arrangement example also satisfies w1 < w3 and w1 ≤ w4 in addition to the condition of w1 < w2. Also in FIG. 10(c), the two bulkhead portions $60_x$ are arranged by the arrangement of the one bulkhead 6 in the region x. In order to further improve bending stiffness of an impact absorption structure A between floor cross members 8, the three bulkheads 6 (thus, six bulkhead portions $60_y$) are arranged in the region y. This arrangement example also satisfies w1 < w3 and w1 ≤ w4 in addition to the condition of w1 < w2.

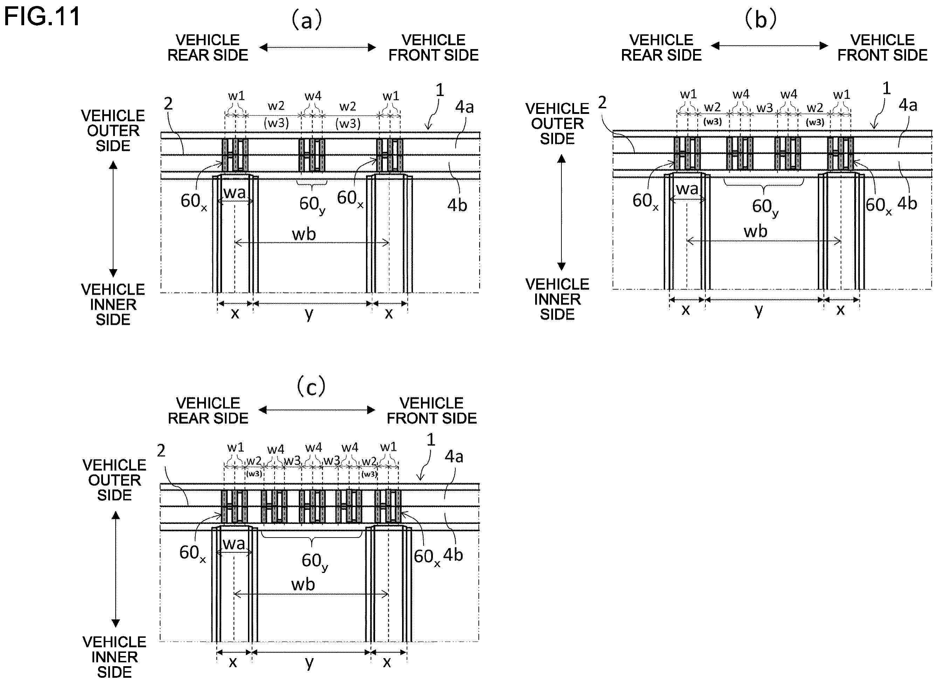

In FIGS. 11(a) to (c), a "bulkhead 6 having a plane square wave shape and including three bulkhead portions 60 arranged in parallel" illustrated in FIG. 8(b) is arranged in each of the regions x and y. In FIG. 11(a), the three bulkhead portions $60_x$ are arranged by the arrangement of the one bulkhead 6 in the region x. The one bulkhead 6 (thus, three bulkhead portions $60_y$) is arranged in the region y. This arrangement example satisfies w1 < w3 and w1 ≤ w4 in addition to the condition of w1 < w2. Also in FIG. 11(b), the three bulkhead portions $60_x$ are arranged by the arrangement of the one bulkhead 6 in the region x. In order to further improve bending stiffness of an impact absorption structure A between floor cross members 8, the two bulkheads 6 (thus, six bulkhead portions $60_y$) are arranged in the region y. This arrangement example also satisfies w1 < w3 and w1 ≤ w4 in addition to the condition of w1 < w2. Also in FIG. 11(c), the three bulkhead portions $60_x$ are arranged by the arrangement of the one bulkhead 6 in the region x. In order to further improve bending stiffness of an impact absorption structure A between floor cross members 8, the three bulkheads 6 (thus, nine bulkhead portions $60_y$) are arranged in the region y. This arrangement example also satisfies w1 < w3 and w1 ≤ w4 in addition to the condition of w1 < w2.

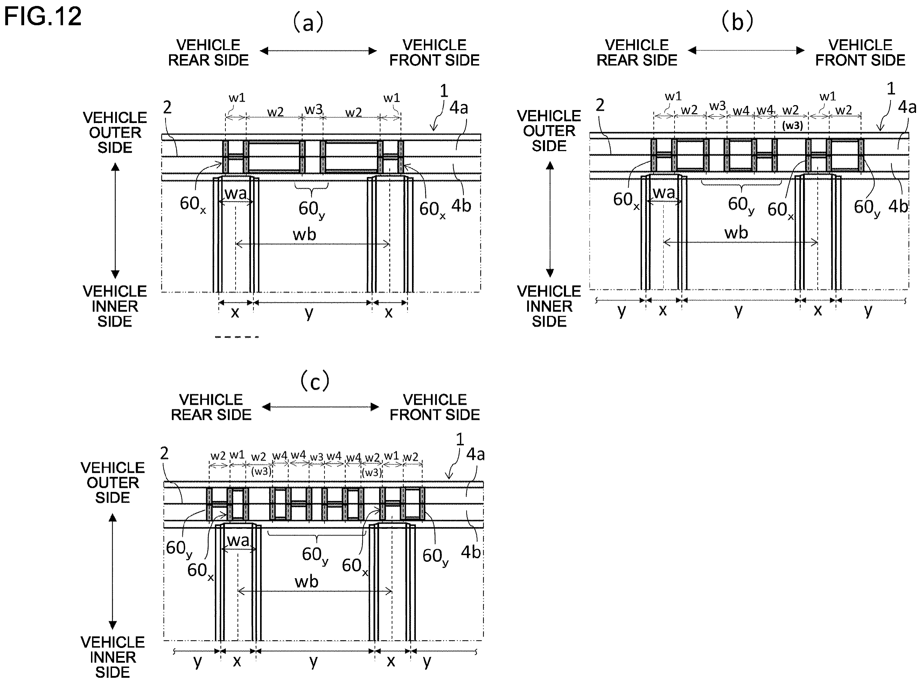

Also in FIGS. 12(a) to (c), the "bulkhead 6 having a plane square wave shape and including three bulkhead portions 60 arranged in parallel" illustrated in FIG. 8(b) is arranged in each of the regions x and y. However, a part of the bulkheads 6 is arranged across the region x and the region y. Thus, a part of the bulkhead portions 60 included in the bulkheads 6 is included in the bulkhead portions $60_x$, and the rest is included in the bulkhead portions $60_y$. In FIG. 12(a), the one bulkhead 6 is arranged across the region x and the region y, the two bulkhead portions $60_x$ are arranged in the region x and the one bulkhead portion $60_y$ is arranged in the region y by the bulkhead 6. On the other hand, no bulkhead 6 is arranged in the region y, and the bulkhead 6 in the above manner is arranged in each of the two regions x adjacent to each other with the region y being interposed therebetween, whereby the two bulkhead portions $60_y$ are arranged in the region y. This arrangement example satisfies w1 < w3 in addition to the condition of w1 < w2.

Also in FIG. 12(b), the one bulkhead 6 is arranged across the region x and the region y, the two bulkhead portions $60_x$ are arranged in the region x and the one bulkhead portion $60_y$ is arranged in the region y by the bulkhead 6. In order to further improve bending stiffness of an impact absorption structure A between floor cross members 8, one bulkhead 6 is further arranged in the region y between the two regions x. Thus, a total of four bulkhead portions $60_y$ are arranged in the region y. This arrangement example also satisfies w1 < w3 and w1 ≤ w4 in addition to the condition of w1 < w2. Also in FIG. 12(c), the one bulkhead 6 is arranged across the region x and the region y, the two bulkhead portions $60_x$ are arranged in

the region x and the one bulkhead portion $60_y$ is arranged in the region y by the bulkhead 6. However, the bulkhead 6 is arranged across the region x and the region y outside thereof, and two bulkheads 6 are arranged in the region y between the two regions x. Thus, the six bulkhead portions $60_y$ are arranged in the region y. This arrangement example also satisfies w1 < w3 and w1 ≤ w4 in addition to the condition of w1 < w2.

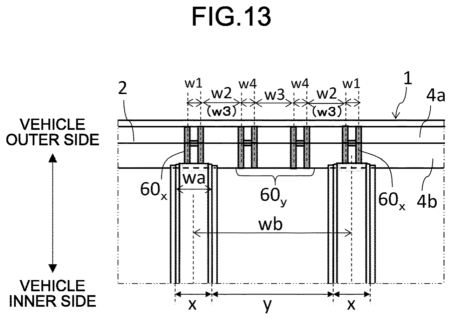

The arrangement form of the bulkheads 6 in the above-described manner may target all the bulkheads 6 or may target only a part of the bulkheads 6. In addition, implementation may be performed in appropriate combination. The arrangement form examples of FIG. 10 to FIG. 12 can be directly applied to the side sill structure of the second form of the present invention, and one of the application examples is illustrated in FIG. 13. FIG. 13 is a view illustrating an arrangement form example of the bulkheads 6 in the vehicle front-rear direction in the side sill structure of the second form of the present invention. In FIG. 13, the "bulkhead 6 having a plane gate type shape and including two bulkhead portions 60 arranged in parallel" illustrated in FIG. 8(a) is arranged in each of the regions x and y, and the two bulkhead portions $60_x$ are arranged by the arrangement of the one bulkhead 6 in the region x. The two bulkheads 6 (thus, four bulkhead portions $60_y$) are arranged in the region y. This arrangement example satisfies w1 < w3 and w1 ≤ w4 in addition to the condition of w1 < w2.

In the side sill structure of the present invention, the sectionally groove-shaped members 4a and 4b (longitudinal surface portion 40) may have an appropriate interval (space) between the side sill outer 1a and the side sill inner 1b (longitudinal surface portions 100) as illustrated in FIG. 1, or may be abutted on or joined to the inner side surfaces of the side sill outer 1a and the side sill inner 1b (longitudinal surface portion 100) mainly to prevent vibration. Thus, as a specific aspect, the sectionally groove-shaped members 4a and 4b (longitudinal surface portion 40) and the side sill outer 1a and the side sill inner 1b (longitudinal surface portions 100) are (i) directly joined to or abutted on each other, (ii) joined to or abut on each other via another member (such as vibration absorption material/vibration absorption parts that perform vibration damping), or (iii) opposed to each other with a predetermined gap therebetween without being joined to or abutted on each other, for example. In addition, since the impact absorption property is improved by transmission of the side collision load to the floor cross members from the initial stage of the collision, structurally, the impact absorption property becomes higher as the width of the impact absorption structure A (EA member) is closer to the total width of the side sill. Thus, from this point of view, the structure of (i) or (ii) is preferable.

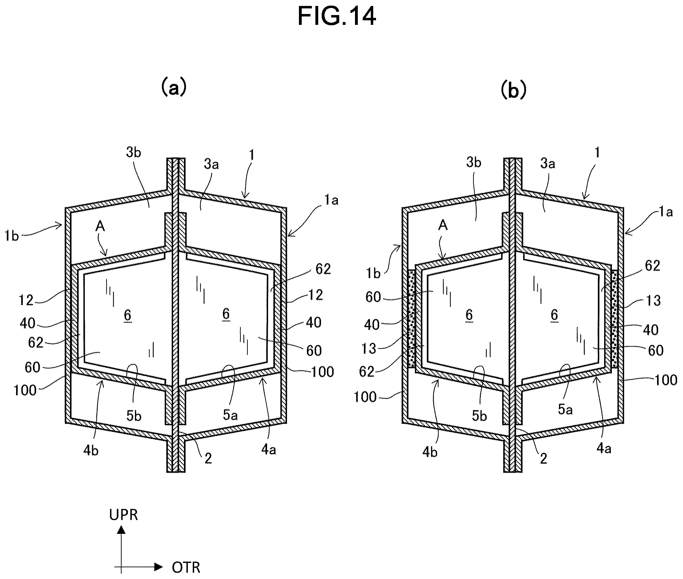

FIG. 14 is a longitudinal sectional view of the side sill in the vehicle width direction, and schematically illustrating an embodiment of a case of the structures (i) and (ii). FIG. 14(a) is a view illustrating an example in which longitudinal surface portions 40 of a sectionally groove-shaped member 4a and a sectionally groove-shaped member 4b are joined to inner side surfaces of longitudinal surface portions 100 of a side sill outer 1a and a side sill inner 1b by welding (usually spot welding) (12 indicates a joint portion in FIG. 14(a)). In addition, FIG. 14(b) is a view illustrating an example in which longitudinal surface portions 40 of a sectionally groove-shaped member 4a and a sectionally groove-shaped member 4b are joined to inner side surfaces of longitudinal surface portions 100 of a side sill outer 1a and a side sill inner 1b with an adhesive 13 (adhesive layer). In a case where adhesion with the adhesive 13 is performed in such a manner, the adhesive may be applied only to a part of a joint surface. The adhesive 13 (adhesive layer) may function as a vibration absorption material (vibration absorption part) that attenuates vibration.

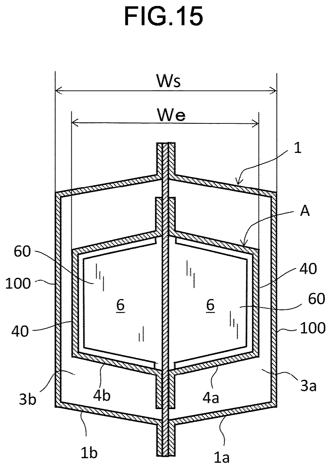

In a case of the structure of (iii), when the interval between the sectionally groove-shaped members 4a and 4b (longitudinal surface portions 40) and the side sill outer 1a and the side sill inner 1b (longitudinal surface portions 100) is too narrow, both members may come into contact with each other due to vibration during traveling, and noise or further vibration may become a problem. Thus, it is preferable that the both members are opposed to each other with a gap therebetween in such a manner as not to come into contact with each other by the vibration during traveling. On the other hand, as described above, since the impact absorption property increases as the width of the impact absorption structure A (EA member) is closer to the total width of the side sill, the width We of the impact absorption structure A in the vehicle width direction (interval between the longitudinal surface portions 40 of both the sectionally groove-shaped members 4a and 4b) is preferably 60% or more of the width Ws of the side sill 1 (interval between the longitudinal surface portions 100 of the side sill outer 1a and the side sill inner 1b). The width We of the impact absorption structure A and the width Ws of the side sill 1 are illustrated in FIG. 15. In a case where the width We of the impact absorption structure A or the width Ws of the side sill 1 varies depending on a position in the vehicle height direction, the widths at a height position where the widths are the widest are defined as Ws and We. The interval (space) between each of the lateral surface portions 41A and 41B of the sectionally groove-shaped member 4a and the sectionally groove-shaped member 4b and the side sill 1 (lateral surface portions 101A and 101B of the side sill outer 1a and the side sill inner 1b) may be adjusted in such a manner that the load input to the floor cross members 8 and the battery case 9 is appropriately balanced by adjustment of an overlapping margin in the height direction between the longitudinal surface portion 40 and the floor cross members 8 and the battery case 9.

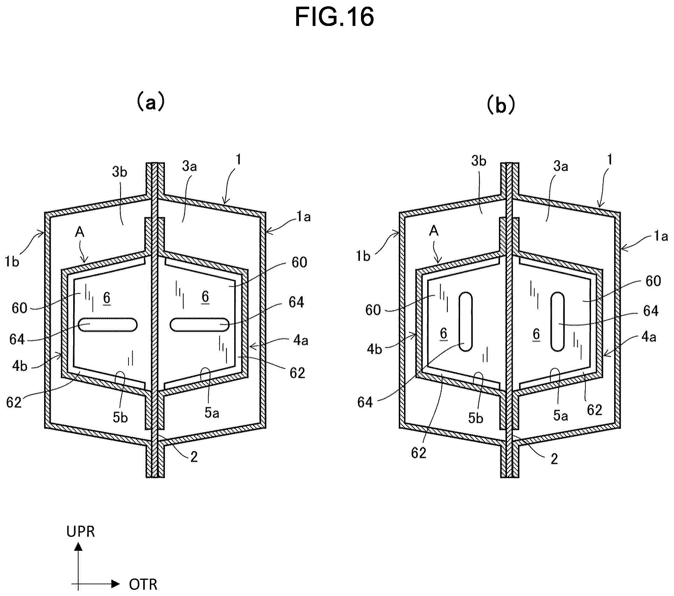

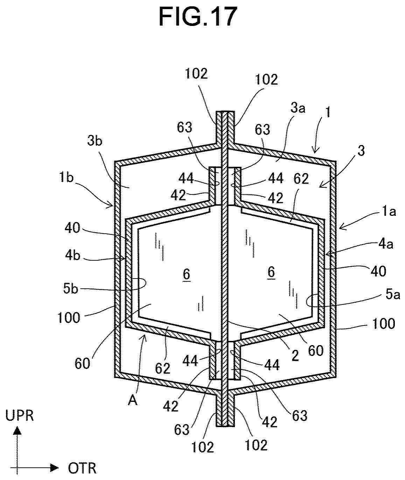

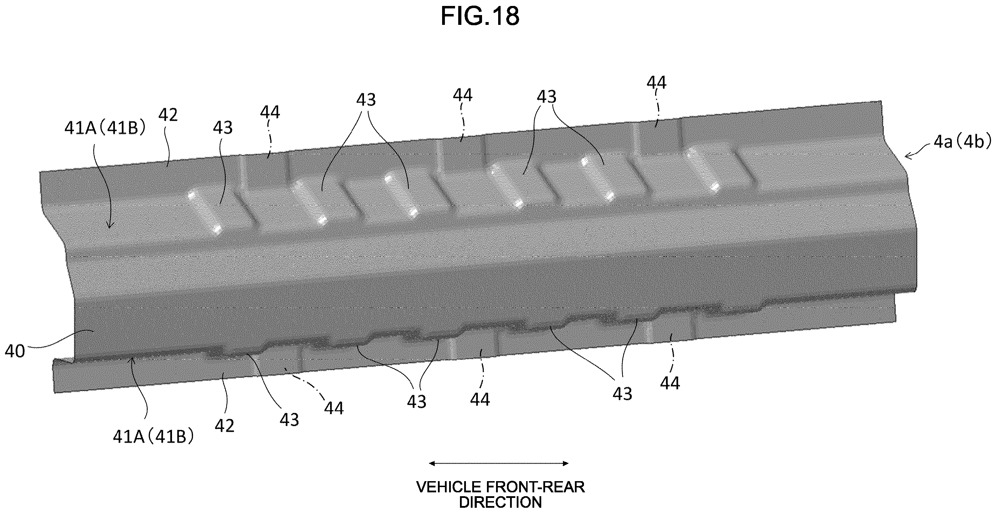

In addition, beads 64 may be provided on the bulkhead portions 60 of the bulkheads 6 in order to improve buckling strength (stiffness) or decrease buckling strength (stiffness). FIG. 16 is a longitudinal sectional view of the side sill in the vehicle width direction, the view schematically illustrating an embodiment of that case. In FIG. 16(a), beads 64 in the vehicle width direction are provided in bulkhead portions 60 of bulkheads 6 in order to increase the buckling strength. On the other hand, in FIG. 16(b), beads 64 (crush beads) in a vertical direction is provided in bulkhead portions 60 of bulkheads 6 in order to reduce the buckling strength. A reason for providing the beads 64 in a manner illustrated in FIG. 16(b) will be described later. Each of the bulkheads 6 can include a unit to control misalignment of the bulkhead 6 at the time of collision (positional displacement in the vehicle front-rear direction). FIG. 17 is a longitudinal sectional view of the side sill in the vehicle width direction, the view schematically illustrating an embodiment of a case where the bulkhead 6 includes such a unit. An embodiment of FIG. 18 to FIG. 20 described later also includes a similar unit. In this bulkhead 6, extending plate parts 63 are respectively connected to an upper end and a lower end of a junction 61 opposed to a partition member 2. At upper and lower joint portions between sectionally groove-shaped members 4a and 4b and the partition member 2, the both members are joined in a state in which the upper and lower extending plate parts 63 are sandwiched between the both members. In the present embodiment, groove-shaped recessed parts 44, into which the extending plate parts 63 are fitted, are formed in upper and lower flange portions 42 of the sectionally groove-shaped members 4a and 4b in the vertical direction (see embodiment of FIG. 17 and FIG. 18 to FIG. 20 described later). The extending plate parts 63 are made to overlap with the sectionally groove-shaped members 4a and 4b (flange portions 42) by being fitted into the groove-shaped recessed parts 44, and the overlapped portions (recessed parts 44 of the flange portions 42 and the extending plate parts 63) are joined by spot welding. As described above, in the sectionally groove-shaped members 4a and 4b in which the extending plate parts 63 are fitted and joined to the groove-shaped recessed parts 44 formed in the upper and lower flange portions 42, the upper and lower flange portions 42 are overlapped with the partition member 2, and the sectionally groove-shaped members 4a and 4b are joined to the partition member 2 via the flange portions 42. Specifically, the overlapped three members that are the flange portion 42 of the sectionally groove-shaped member 4a, the flange portion 42 of the sectionally groove-shaped member 4b, and the partition member 2 are joined by spot welding at a portion where the extending plate parts 63 are not sandwiched. With the structure in the above manner, positional displacement of the bulkheads 6 can be specifically effectively controlled, and the members can be reliably joined by spot welding.

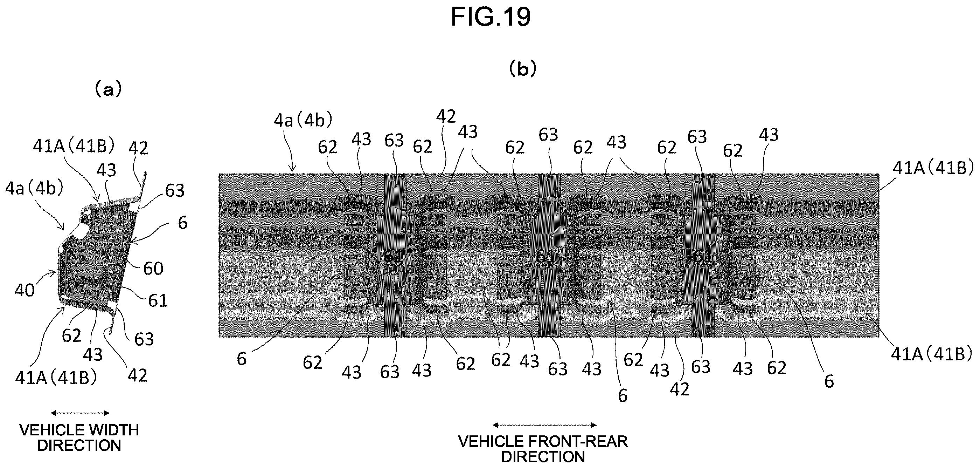

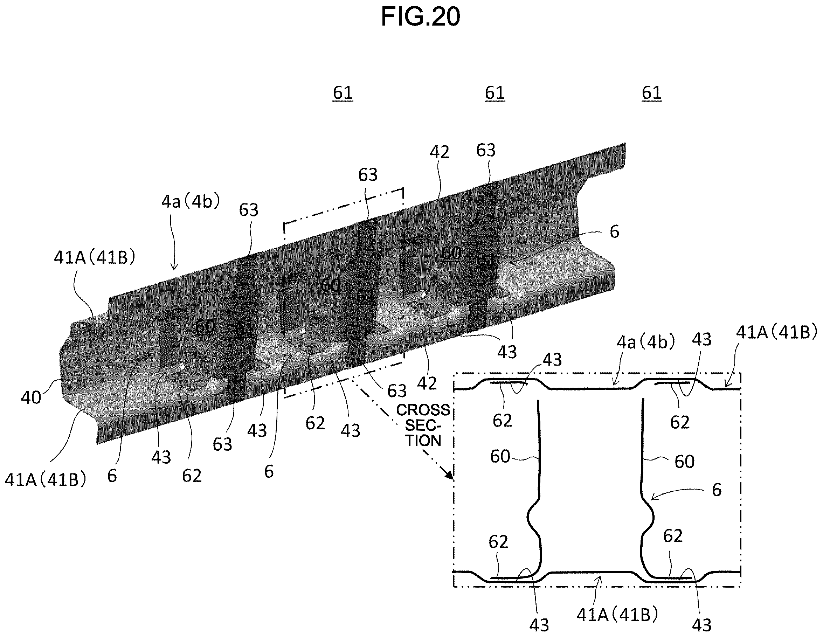

In each of the lateral surface portions 41A and 41B of the sectionally groove-shaped member 4a and sectionally groove-shaped member 4b, beads 43 can be formed in the vehicle width direction in order to increase the buckling strength. FIG. 18 to FIG. 20 are views schematically illustrating an embodiment in that case. FIG. 18 is a perspective view of a sectionally groove-shaped member 4a (4b) on a vehicle outer side, in which member beads 43 are formed, as viewed from the outside (a sectionally groove-shaped member 4b and a bulkhead 6 on a vehicle body inner side can have a similar structure as indicated by parenthesized reference signs). FIG. 19 and FIG.20 are views illustrating a state in which the bulkhead 6 is assembled to the sectionally groove-shaped member 4a (4b). Among them, FIG. 19(a) is a perspective view illustrating the sectionally groove-shaped member 4a (4b) in a state of being sectioned in the vehicle width direction, FIG. 19(b) is a rear view of the sectionally groove-shaped member 4a (4b) and the bulkhead 6, and FIG. 20 is a perspective view and a partial sectional view of the same. In the lateral surface portion 41A (41B) of the sectionally groove-shaped member 4a (4b), the beads 43 (grooves formed inside the lateral surface portion 41A (41B)) in the vehicle width direction are formed in a plurality of positions at appropriate intervals in the vehicle front-rear direction. Thus, buckling strength of the sectionally groove-shaped member 4a (4b) can be increased. In addition, in the present embodiment, flange portions 62 for joining which flange portions are formed in the bulkhead portions 60 of the bulkhead 6 are fitted into the two adjacent beads 43, whereby misalignment (positional displacement in the vehicle front-rear direction) of the bulkhead 6 at the time of collision is controlled. In the present embodiment, extending plate parts 63 at upper and lower ends of a junction 61 of the bulkhead 6 are joined at upper and lower joint portions of the sectionally groove-shaped member 4a (4b) and a partition member 2 (not illustrated) by being sandwiched between the both members. Thus, in combination with this configuration, positional displacement of the bulkhead 6 at the time of the collision is specifically effectively controlled.

In the embodiments of FIG. 1 and the like described above, the outer side portion (sectionally groove-shaped member 4a) and the inner side portion (sectionally groove-shaped member 4b) of the impact absorption structure A have substantially the same height (thickness) in the vehicle height direction, and are opposed to each other with the partition member 2 being interposed therebetween. Specifically, in these embodiments, the inner side portion and the outer side portion of the impact absorption structure A have substantially symmetrical shapes with the partition member 2 being interposed therebetween in the vehicle width direction. On the other hand, an impact absorption structure A can have a structure in which one of an inner side portion or an outer side portion extends more in the vehicle height direction than the other (that is, a structure formed long in the vehicle height direction). In this case, the inner side portion or the outer side portion may extend in a downward direction or upward direction in the vehicle height direction. In addition, the portion may extend in both the downward direction and the upward direction. The portion extending in such a manner is referred to as a "portion e". A space portion s not occupied by the impact absorption structure A is formed in a portion opposed to the portion e with the partition member 2 being interposed therebetween.

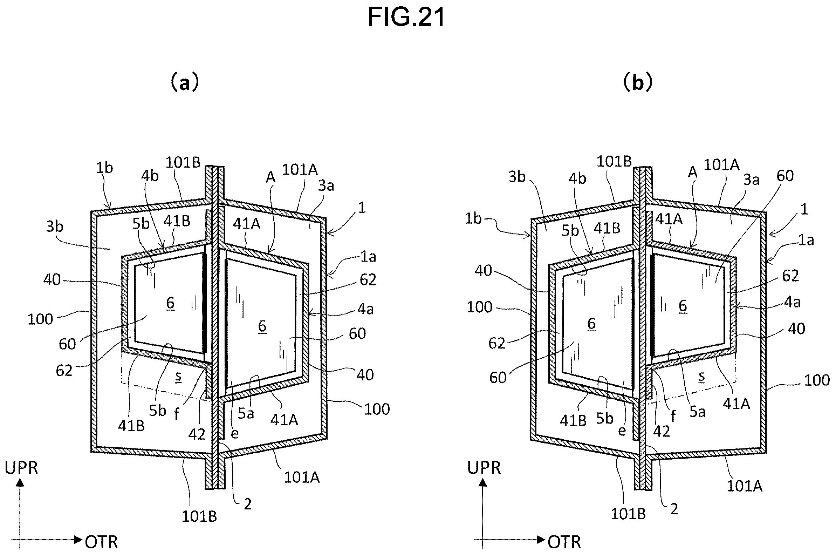

FIG. 21 is a longitudinal sectional view of a side sill in the vehicle width direction, the view schematically illustrating an embodiment of a side sill structure of the present invention having such a structure. In an embodiment of FIG. 21(a), a lower portion of an impact absorption structure A has a structure in which an outer side portion extends in a downward direction compared to an inner side portion (that is, a structure formed long in the downward direction). In an upper portion of the impact absorption structure A, the outer side portion and the inner side portion are opposed to each other with a partition member 2 being interposed therebetween. On the other hand, in the lower portion of the impact absorption structure A, the outer side portion extends in the downward direction compared to the inner side portion and forms a portion e. A space portion s (space portion in a closed sectional space 3b) not occupied by the impact absorption structure A is formed in the inner side portion opposed to the portion e with the partition member 2 being interposed therebetween.

In an embodiment of FIG. 21(b), a lower portion of an impact absorption structure A has a structure in which an inner side portion extends in a downward direction compared to an outer side portion (that is, a structure formed long in the downward direction). Similarly to the embodiment of FIG. 21(a), in an upper portion of the impact absorption structure A, the outer side portion and the inner side portion are opposed to each other with a partition member 2 being interposed therebetween. On the other hand, in the lower portion of the impact absorption structure A, the inner side portion extends in the downward direction compared to the outer side portion and forms a portion e. A space portion s (space portion in a closed sectional space 3a) not occupied by the impact absorption structure A is formed in the outer side portion opposed to the portion e with the partition member 2 being interposed therebetween.

In the structures of the impact absorption structure A in a manner illustrated in FIG. 21, a collision energy absorption property is secured by an effect to cause buckling by the structure around the space portion s. Thus, weight of the impact absorption structure A (inner side portion or outer side portion) can be reduced by the space portion s without the collision energy absorption property of the impact absorption structure A being decreased as compared with the structure in FIG. 1. More specifically, for example, in a case of FIG. 21(a), a "corner R portion f formed by a lower lateral surface portion 41B of a sectionally groove-shaped member 4b and a flange portion 42" and a "corner portion of a bulkhead 6 in contact with the corner R portion f" in the inner side portion of the impact absorption structure A are abutted on a bulkhead 6 of the outer side portion via the partition member 2. Thus, since buckling is also induced from a periphery of the abutting portion of the bulkhead 6 on the outer side portion (effect to cause buckling) at the time of the side collision, even the impact absorption structure A having the structure in a manner illustrated in FIG. 21(a) does not have a lower collision energy absorption property than the structure of FIG. 1. On the other hand, the weight of the impact absorption structure A (inner side portion) can be reduced by the space portion s. In addition, the same applies to a case of FIG. 21(b), and a "corner R portion f formed by a lower lateral surface portion 41A of a sectionally groove-shaped member 4a and a flange portion 42" and a "corner portion of a bulkhead 6 in contact with the corner R portion f" in the outer side portion of the impact absorption structure A are abutted on a bulkhead 6 in the inner side portion via the partition member 2. Thus, since buckling is also induced from a periphery of the abutting portion of the bulkhead 6 of the inner side portion at the time of the side collision, even the impact absorption structure A having the structure in a manner illustrated in FIG. 21(b) does not have a lower collision energy absorption property than the structure of FIG. 1. On the other hand, the weight of the impact absorption structure A (outer side portion) can be reduced by the space portion s. The above-described effects are not limited to the embodiment of FIG. 21, and can be naturally acquired as long as the impact absorption structure A has the side sill structure having the portion e.

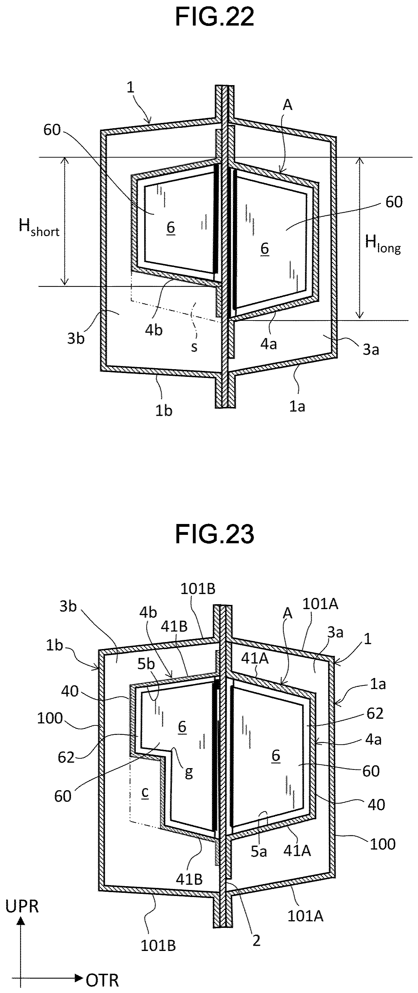

In the structure of the impact absorption structure A in a manner illustrated in FIG. 21, when a height of the smaller one of the outer side portion (sectionally groove-shaped member 4a) or the inner side portion (sectionally groove-shaped member 4b), such as the inner side portion in FIG. 21(a) is too short, surface stiffness of a bulkhead 6 in a closed sectional space 5b is reduced at the time of the side collision, and a function of maintaining a sectional shape of the inner side portion of the impact absorption structure A is decreased, and the collision energy absorption property is decreased. Thus, a height $H_{short}$ of the "portion having a smaller height" illustrated in FIG. 22 is preferably not excessively short with respect to a height $H_{long}$ of a "portion having a higher height" having the portion e extending in the downward direction. Specifically, $H_{short}$ is preferably about 40% or more, desirably about 50% or more of $H_{long}$. On the other hand, when a difference in height between the outer side portion (sectionally groove-shaped member 4a) and the inner side portion (sectionally groove-shaped member 4b) (difference between $H_{short}$ and $H_{long}$) is too small, the above-described effect to cause buckling of the bulkhead 6 relatively decreases. That is, the effect to cause buckling and the weight reduction effect by the structure of the impact absorption structure A in a manner illustrated in FIG. 21 are relatively reduced. Thus, in order to sufficiently receive the effects, it is preferable that the difference between the height $H_{short}$ of the "portion having a shorter height" and the height $H_{long}$ of the "portion having a higher height" illustrated in FIG. 22 is not excessively small. Specifically, $H_{short}$ is preferably about 80% or less, and is desirably about 65% or less of $H_{long}$. As illustrated in FIG. 22, in a case where the height of the outer side portion (sectionally groove-shaped member 4a) or the inner side portion (sectionally groove-shaped member 4b) of the impact absorption structure A varies depending on a position in the vehicle width direction, the height at a position having the highest height is set as the height $H_{short}$ of the "portion having a shorter height" or the height $H_{long}$ of the "portion having a higher height".

In a case where the side sill structure of the present invention is applied to the underbody structure in a manner illustrated in FIG. 3, that is, an "underbody structure including a side sill 1 arranged in a vehicle longitudinal direction on each of both sides of an underbody, a floor cross member 8 arranged between the both side sills 1 and having both side portions fixed to upper portions of the both side sills 1 (fixed directly or via a floor panel or the like), a battery case 9 arranged below the floor cross member 8 and having both side portions opposed to lower portions of the both side sills 1, and the like", from a viewpoint of acquiring the effect of reducing the input load to the battery case in addition to securing of the collision energy absorption property, it is preferable that the lower portion of the impact absorption structure A has the structure in which one of the inner side portion or the outer side portion extends in the downward direction compared to the other (that is, the structure formed long in the downward direction) as in the embodiment of FIG. 21. In this case, in the upper portion of the impact absorption structure A, the outer side portion and the inner side portion are opposed to each other with the partition member 2 being interposed therebetween, and are positioned on horizontal extension of the floor cross members 8 (at least a portion in the thickness direction of the floor cross members 8) in the vehicle width direction. On the other hand, the portion e extending in the downward direction is positioned on the horizontal extension of the battery case 9 (at least a portion in the height direction of the battery case 9) in the vehicle width direction.

In a case where the side sill structure of the embodiment of FIG. 21 is applied to the underbody structure in the manner illustrated in FIG. 3, the following effect (effect of reducing the input load to the battery case) can be acquired at the time of the side collision in which the collision load is input to the side sill 1 from the outside of the vehicle in the vehicle width direction. Since the space portion s is provided in the vehicle width direction between the outer side portion in the lower portion of the impact absorption structure A and the battery case side member 90 (that is, in the vehicle width direction, the space portion s and the lower portion of the outer side portion of the impact absorption structure A are located on the horizontal extension of the battery case side member 90), a rise of contact reaction force generated in the battery case side member 90 can be delayed. On the other hand, in the upper portion of the impact absorption structure A, the inner side portion and the outer side portion are opposed to each other with the partition member 2 being interposed therebetween, and are aligned in the vehicle width direction with the floor cross members 8 via the side sill 1 (that is, located on the horizontal extension of the floor cross members 8 in the vehicle width direction). Thus, a load transfer path that directly transfers a collision load input to the side sill 1 to the floor cross members 8 is formed, and contact reaction force generated in the floor cross members 8 quickly rises. Then, due to the contact reaction force generated in the floor cross members 8, the upper side, specifically, the outer side portion of the impact absorption structure A located on the horizontal extension of the floor cross members 8 via the side sill 1 in the vehicle width direction is efficiently crushed first and absorbs the side collision load. Then, after the side collision progresses and the side sill 1 (upper side of the impact absorption structure A) is deformed, the contact reaction force generated in the battery case side member 90 starts increasing. Thus, a peak load input to the battery case 9 is reduced, and the deformation of the battery case 9 can also be controlled.

In the embodiments of FIG. 1 and the like described above, the outer side portion (sectionally groove-shaped member 4a) and the inner side portion (sectionally groove-shaped member 4b) of the impact absorption structure A have a quadrangular (trapezoidal) sectional shape in the vehicle width direction, and are opposed to each other with the partition member 2 being interposed therebetween. Specifically, in these embodiments, the inner side portion and the outer side portion of the impact absorption structure A have substantially symmetrical shapes with the partition member 2 being interposed therebetween in the vehicle width direction. On the other hand, the impact absorption structure A can have a structure in which a concave part c is formed in a manner of being opposed to the inner surface of the side sill 1 (side sill inner 1b or the side sill outer 1a). In this case, a space (a space formed by the concave part c) is secured in the vehicle width direction between the impact absorption structure A and the side sill 1.

Since only needing to be formed opposite to the inner surface of the side sill 1 (side sill inner 1b or side sill outer 1a), the concave part c may be provided in either the inner side portion or the outer side portion of the impact absorption structure A, or may be provided in both the inner side portion and the outer side portion. In addition, a formed position of the concave part c in the height direction of the impact absorption structure A is also arbitrary and is basically not limited. For example, the concave part c can be formed in a lower region in the height direction of the impact absorption structure A. Furthermore, the concave part c can be formed in such a manner as to include not only the lower region in the height direction of the impact absorption structure A but also a region above the lower region (that is, formed in a region including the lower portion in the height direction of the impact absorption structure A).

FIG. 23 is a longitudinal sectional view of the side sill in the vehicle width direction, the view schematically illustrating an embodiment of the side sill structure of the present invention in which structure a concave part c is formed in an impact absorption structure A. In the embodiment of FIG. 23, a concave part c is formed in a lower region of an inner side portion of an impact absorption structure A in such a manner as to face an inner surface of a side sill 1 (side sill inner 1b). The concave part c is formed by recessing of the lower region of the inner side portion (sectionally groove-shaped member 4b) of the impact absorption structure A facing the side sill inner 1b (longitudinal surface portion 100 and lower lateral surface portion 101B) stepwise in such a manner that a space (space formed by the concave part c) is secured in the vehicle width direction between the impact absorption structure A and the side sill 1 (side sill inner 1b) in a closed sectional space 3b. That is, the concave part c is formed in such a manner as to face the longitudinal surface portion 100 and the lower lateral surface portion 101B of the side sill inner 1b in the lower region of the inner side portion of the impact absorption structure A. The concave part c can be formed in such a manner as to include the lower region of the impact absorption structure A and a region above the lower region (that is, formed in a region including the lower portion in the height direction of the impact absorption structure A). Similarly to the embodiment of FIG. 21, in an upper portion of the impact absorption structure A, an outer side portion and the inner side portion face each other with a partition member 2 being interposed therebetween. A bulkhead 6 of the inner side portion is configured to have a shape corresponding to a sectional shape of the inner side portion (sectionally groove-shaped member 4b) in which the concave part c is formed.

The concave part c may be formed in a lower region or a region including a lower portion in a height direction of the outer side portion of the impact absorption structure A in such a manner as to face the inner surface of the side sill 1 (side sill outer 1a). For example, in a case where the concave part c in the form according to FIG. 23 is formed in the lower region of the outer side portion of the impact absorption structure A, the concave part c is formed by recessing of the lower region of the outer side portion (sectionally groove-shaped member 4a) of the impact absorption structure A facing the side sill outer 1a (longitudinal surface portion 100 and lower lateral surface portion 101A) stepwise in such a manner that a space (space formed by the concave part c) is secured in the vehicle width direction between the impact absorption structure A and the side sill 1 (side sill outer 1a) in the closed sectional space 3a. That is, the concave part c is formed in such a manner as to face the longitudinal surface portion 100 and the lower lateral surface portion 101A of the side sill outer 1a in the lower region of the outer side portion of the impact absorption structure A.

In the structure of the impact absorption structure A in a manner illustrated in FIG. 23, since a collision energy absorption property is secured by an effect to cause buckling in which the structure around the concave part c is buckled, the impact absorption structure A (inner side portion or outer side portion) can be reduced in weight by the concave part c without decreasing the collision energy absorption property of the impact absorption structure A as compared with the structure in FIG. 1. This will be described more specifically with the case of FIG. 23 in which the concave part c is formed in the inner side portion of the impact absorption structure A as an example. Due to the formation of the concave part c, a notch along a concave shape of the concave part c is also formed in a bulkhead 6 in the closed sectional space 5b. Thus, a corner R portion g of the notch of the bulkhead 6 is buckled and bent at the time of side collision, and buckling is also induced in a peripheral portion of the corner R portion g of the notch, and a collision load is absorbed (effect to cause buckling). Thus, even in the impact absorption structure A having the structure in the manner illustrated in FIG. 23, the impact absorption structure A (inner side portion) can be reduced in weight by the concave part c while the collision energy absorption property is not reduced compared to that of the structure in FIG. 1. In addition, the same applies to a case where the concave part c is formed in the outer side portion of the impact absorption structure A. Due to the formation of the concave part c, the notch along the concave shape of the concave part c is also formed in the bulkhead 6 in the closed sectional space 5a, and buckling is also induced from the corner R portion g of the notch of the bulkhead 6 at the time of the side collision. Thus, even in the impact absorption structure A in which the concave part c is formed, the collision energy absorption property is not deteriorated as compared with the structure of FIG. 1 while the impact absorption structure A (outer side portion) can be reduced in weight by the concave part c. The above-described effects are not limited to the embodiment of FIG. 23, and can be naturally acquired as long as the impact absorption structure A has the side sill structure having the concave part c.

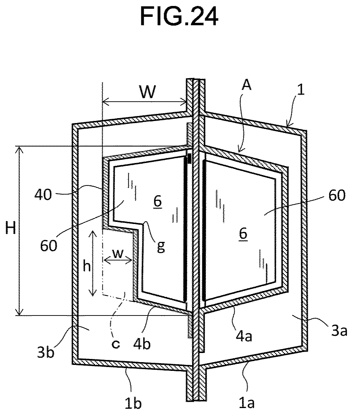

In the structure of the impact absorption structure A in a manner illustrated in FIG. 23, when a height (width) of the concave part c in the vehicle height direction (height direction of the impact absorption structure A) is too high, a pressure receiving surface portion (longitudinal surface portion 40 of the sectionally groove-shaped member 4b) of the inner side portion opposed to the floor cross members or the like becomes narrow, and a collision characteristic in the upper portion of the impact absorption structure A is decreased. Thus, a height h in the vehicle height direction of the concave part c illustrated in FIG. 24 is preferably not excessively higher than a height (thickness) H in the vehicle height direction of the inner side portion (or outer side portion) of the impact absorption structure A. Specifically, the height h is preferably about 90% or less, desirably about 75% or less of the height (thickness) H in the vehicle height direction of the inner side portion (or outer side portion) of the impact absorption structure A. On the other hand, when the height (width) of the concave part c in the vehicle height direction is too short, the pressure receiving surface portion (longitudinal surface portion 40 of the sectionally groove-shaped member 4b) of the inner side portion opposed to the floor cross members or the like becomes wide, and the collision load is dispersed. As a result, since buckling is less likely to be generated at the corner R portion g of the notch of the bulkhead 6 which corner R portion g corresponds to the concave part c, the effect of improving the collision energy absorption property by provision of the concave part c is less likely to be acquired. That is, the effect to cause buckling and the weight reduction effect due to the structure of the impact absorption structure A in the manner illustrated in FIG. 23 are relatively decreased. Thus, in order to receive the effects sufficiently, the height h in the vehicle height direction of the concave part c illustrated in FIG. 24 is preferably not excessively shorter than the height (thickness) H in the vehicle height direction of the inner side portion (or outer side portion) of the impact absorption structure A. Specifically, the height h is preferably about 20% or more, desirably about 50% or more of the height (thickness) H in the vehicle height direction of the inner side portion (or outer side portion) of the impact absorption structure A.

In addition, in the structure of the impact absorption structure A in the manner illustrated in FIG. 23, when the width (depth) of the concave part c in the vehicle width direction is too high, the corner R portion g of the notch of the bulkhead 6 which corner R portion g corresponds to the concave part c comes close to the partition member 2, and buckling of the peripheral portion of the corner R portion g is less likely to be generated, whereby the collision energy absorption property is decreased. Thus, it is preferable that a width w in the vehicle width direction of the concave part c illustrated in FIG. 24 is not excessively large with respect to a width W in the vehicle width direction of the inner side portion (or outer side portion) of the impact absorption structure A. Specifically, the width w is preferably about 90% or less of the width W in the vehicle width direction of the inner side portion (or outer side portion) of the impact absorption structure A. On the other hand, when the width (depth) of the concave part c in the vehicle width direction is too small, the concave part c is buckled and bent, and the space between the impact absorption structure A and the side sill 1 is blocked and the impact absorption structure A abuts on the side sill 1. Thus, the contact reaction force generated in the battery case or the like cannot be controlled to be low. Thus, it is preferable that the width w in the vehicle width direction of the concave part c is not excessively small with respect to the width W in the vehicle width direction of the inner side portion (or outer side portion) of the impact absorption structure A. Specifically, the width w is preferably about 20% or more of the width W in the vehicle width direction of the inner side portion (or outer side portion) of the impact absorption structure A.

As illustrated in FIG. 24, in a case where the height of the outer side portion (sectionally groove-shaped member 4a) or the inner side portion (sectionally groove-shaped member 4b) of the impact absorption structure A varies depending on a position in the vehicle width direction, the height at a position having the highest height is set as the height H. In addition, in a case where the width of the outer side portion (sectionally groove-shaped member 4a) or the inner side portion (sectionally groove-shaped member 4b) varies depending on a position in the vehicle height direction, the width at a position having the largest width is set as the width W. Furthermore, in a case where the height of the concave part c varies depending on a position in the vehicle width direction, the height at the position having the highest height is set as the height h of the concave part c. Furthermore, in a case where the width of the concave part c varies depending on the position in the vehicle height direction, the width at a position having the largest width is set as the width w of the concave part c.

In addition, in a case where the side sill structure of the present invention is applied to the underbody structure in the manner illustrated in FIG. 3, that is, the "underbody structure including a side sill 1 arranged in a vehicle longitudinal direction on each of both sides of an underbody, a floor cross member 8 arranged between the both side sills 1 and having both side portions fixed to upper portions of the both side sills 1 (fixed directly or via a floor panel or the like), a battery case 9 arranged below the floor cross member 8 and having both side portions opposed to lower portions of the both side sills 1, and the like", from a viewpoint of acquiring the effect of reducing the input load to the battery case in addition to securing the collision energy absorption property, it is preferable to have a structure in which the concave part c is formed in a manner of being opposed to the inner surface of the side sill 1 (side sill inner 1b or side sill outer 1a) in either one of the inner side portion or the outer side portion sandwiching the partition member 2 in the lower region (or region including the lower part) in the height direction of the impact absorption structure A as in the embodiment of FIG. 23. In this case, the space (space formed by the concave part c) is secured in the vehicle width direction between the lower portion of the impact absorption structure A and the side sill 1.

In a case where the side sill structure of the embodiment of FIG. 23 is applied to the underbody structure in the manner illustrated in FIG. 3, the following effect (effect of reducing the input load to the battery case) can be acquired at the time of the side collision in which the collision load is input to the side sill 1 from the outside of the vehicle in the vehicle width direction. Since the concave part c is provided in the inner side portion of the lower portion of the impact absorption structure A, the rise of the contact reaction force generated in the battery case side member 90 can be delayed. Furthermore, since the corner R portion g of the notch of the bulkhead 6 which corner R portion g corresponds to the concave part c is buckled and bent, and buckling is also induced in the peripheral portion of the corner R portion g and continues to absorb the collision load, even when the side sill 1 is deformed due to the progress of the side collision, the contact reaction force generated in the battery case side member 90 can be kept low, and the load input to the battery case 9 can be greatly reduced. Thus, deformation of the battery case 9 can be controlled. The concave part c of the impact absorption structure A can also be applied to the side sill structure of the second form of the present invention in a manner illustrated in FIG. 6 and FIG. 7. As described above, the concave part c can be formed in the outer side portion (sectionally groove-shaped member 4a and the bulkhead 6 inside) of the impact absorption structure A in such a manner as to be opposed to the inner surface of the side sill 1 (side sill outer 1a). In the side sill structure of the second form of the present invention, the inner side portion (inner side component portion) of the impact absorption structure A is the bulkhead 6 installed in the closed sectional space 3b. The concave part c (notch) can be formed in the bulkhead 6, which is the component portion of the impact absorption structure A, in such a manner as to be opposed to the inner surface of the side sill 1 (side sill inner 1b). Also in the case of the second form of the present invention, the concave part c may be provided in each of the outer side portion and the inner side portion of the impact absorption structure A. In addition, even in a case where the concave part c is provided in any form, an effect similar to that described above with respect to the first form of the present invention can be acquired.

Hereinafter, a preferable material of a metal sheet (usually a "steel sheet") included in the impact absorption structure A will be described. Yield strength of the metal sheet included in the impact absorption structure A (sectionally groove-shaped members 4a and 4b and bulkheads 6) is preferably equal to or less than yield strength of a metal sheet included in the floor cross members 8. This is because, at the time of the side collision, the impact absorption structure A is reliably deformed prior to the floor cross members 8, absorbs collision energy, and controls deformation of the floor cross members 8. Thus, in a case where the yield strength of the metal sheet included in the impact absorption structure A is the same as the yield strength of the metal sheet included in the floor cross members 8, beads 64 (crush beat) in a manner illustrated in FIG. 16(b), or the like are applied to the bulkheads 6 included in the impact absorption structure A and buckling strength of the impact absorption structure A (= load at which the member itself starts buckling deformation, the same applies hereinafter) is preferably made lower than buckling strength of the floor cross members 8.

The metal sheet included in the impact absorption structure A (sectionally groove-shaped members 4a and 4b and bulkheads 6) preferably has tensile strength of 780 MPa-grade or more. As for the collision characteristic of the impact absorption structure A, as the load (hereinafter referred to as "yield strength") at the time of turning to plastic deformation through elastic deformation immediately after the start of deformation of the impact absorption structure A at the time of side collision is higher, deformation at the time of collision is less likely to be generated, and the collision characteristic is better. The yield strength increases as the yield strength of the metal sheet used for the impact absorption structure A increases, and it is preferable to use a metal sheet that has tensile strength of 780 MPa-grade or more and that has higher tensile strength than ordinary steel. From a similar viewpoint, a metal sheet having tensile strength of 980 MPa-grade or more is more preferable, and a metal sheet having tensile strength of 1470 MPa-grade or more is specifically preferable. In addition, it is known that about 1/3 of the tensile strength corresponds to the Vickers hardness HV (for example, JIS Handbook (1) Ferrous Materials & Metallurgy I, edited by Japanese Standards Association, SAE-J-417 Conversion Table of Hardness). Thus, in the metal sheet included in the impact absorption structure A, the Vickers hardness HV at a position of 1/4 of a sheet thickness of the metal sheet is preferably 250 or more, more preferably 310 or more, and specifically preferably 440 or more.

The metal sheet included in the impact absorption structure A is preferably a steel sheet including, in % by mass, C: 0.030% or more and 0.250% or less, Si: 0.01% or more and 2.50% or less, Mn: 1.00% or more and less than 3.50%, P: 0.001% or more and 0.100% or less, S: 0.0200% or less, and Al: 0.010% or more and 2.000% or less. When the amount of C is less than 0.030%, it is generally difficult to make the tensile strength of the metal sheet high (for example, 780 MPa-grade or more). When the tensile strength of the metal sheet is low, it is difficult to secure the yield strength of the impact absorption structure A at the time of the side collision, and the collision characteristic is decreased. On the other hand, when the amount of C exceeds 0.250%, brittleness of martensite as a hard phase (described later) is caused, and ductility is decreased. Thus, a bending characteristic is easily decreased, and fracture of the metal sheet is easily caused when the impact absorption structure A is crushed. Thus, the amount of C is preferably 0.030% or more and 0.250% or less. In addition, from the viewpoint described above, the amount of C is more preferably 0.100% or more and 0.250% or less, and still more preferably 0.150% or more and 0.250% or less.

Si is an element effective for solid-solution strengthening of steel, improving balance between tensile strength and elongation (ductility), and forming retained austenite (described later). In order to acquire such an effect, the amount of Si is preferably 0.01% or more. On the other hand, when the amount of Si exceeds 2.50%, the bending characteristic is easily decreased by a decrease in ductility due to brittleness, and fracture of the metal sheet is easily generated when the impact absorption structure A is crushed. Thus, the amount of Si is preferably 0.01% or more and 2.50% or less.

Mn is an element effective for strengthening of steel, and promoting formation of martensite that is a hard phase. In order to acquire such an effect, the amount of Mn is preferably 1.00% or more. When the amount of Mn is less than 1.00%, the formation of martensite is not promoted, and it is generally difficult to make the tensile strength of the metal sheet high (for example, 780 MPa-grade or more). On the other hand, when the amount of Mn exceeds 3.50%, the bending characteristic is easily decreased due to a decrease in ductility, and fracture of the metal sheet is easily generated when the impact absorption structure A is locally deformed. Thus, the amount of Mn is preferably 1.00% or more and 3.50% or less.

P is an element effective for strengthening of steel. In order to acquire such an effect, P is preferably 0.001% or more. On the other hand, when the amount of P exceeds 0.100%, the steel is embrittled due to grain boundary segregation, and an impact strength characteristic (impact-resistant) is easily decreased. Thus, the amount of P is preferably 0.001% or more and 0.100% or less. Since S exists as an inclusion such as MnS and deteriorates the impact strength characteristic and weldability, the amount thereof is preferably reduced as much as possible. The amount of S is preferably 0.0200% or less in consideration of a manufacturing cost. Al is an element effective for forming ferrite and improving TS-El balance. In order to acquire such an effect, the amount of Al is preferably 0.010% or more. On the other hand, when the amount of Al exceeds 2.000%, there is a risk of slab cracking during continuous casting. Thus, the amount of Al is preferably 0.010% or more and 2.000% or less.

The steel sheet may further include, in % by mass, at least one element selected from N: 0.0100% or less, Nb: 0.200% or less, Ti: 0.200% or less, V: 0.200% or less, B: 0.0100% or less, Cr: 1.000% or less, Ni: 1.000% or less, Mo: 1.000% or less, Sb: 0.200% or less, Sn: 0.200% or less, Cu: 1.000% or less, Ta: 0.100% or less, W: 0.500% or less, Mg: 0.0200% or less, Zn: 0.0200% or less, Co: 0.0200% or less, Zr: 0.1000% or less, Ca: 0.0200% or less, Se: 0.0200% or less, Te: 0.0200% or less, Ge: 0.0200% or less, As: 0.0500% or less, Sr: 0.0200% or less, Cs: 0.0200% or less, Hf: 0.0200% or less, Pb: 0.0200% or less, Bi: 0.0200% or less, and REM: 0.0200% or less. The remainder of the steel component is Fe and unavoidable impurities.

The metal sheet included in the impact absorption structure A preferably has a microstructure of steel including ferrite in an area ratio of 0% or more and 65% or less, martensite and tempered martensite in an area ratio of 30% or more and 100% or less in total, and retained austenite in an area ratio of 0% or more and 15% or less at a position of 1/4 of the sheet thickness of the metal sheet. Although Ferrite as a soft phase can be appropriately included to improve ductility of the metal sheet (steel sheet), when the area ratio thereof exceeds 65%, it is generally difficult to make the tensile strength of the metal sheet high (for example, 780 MPa-grade or more). Thus, the area ratio of ferrite is preferably 0% or more and 65% or less. Martensite and tempered martensite contribute to reinforcement of the metal sheet (steel sheet), and are necessary structures from a viewpoint of acquiring high tensile strength (for example, 780 MPa-grade or more). In order to acquire such an effect, the area ratio of martensite and tempered martensite is preferably 30% or more and 100% or less in total. Although the retained austenite may be included for the purpose of improving ductility, when the area ratio thereof exceeds 15%, the retained austenite transforms into hard martensite after press forming and causes a decrease in ductility (bending characteristic), and bend forming-resistant break property (collision characteristic) at the time of local deformation of the impact absorption structure A is easily decreased. Thus, the area ratio of retained austenite is preferably 0% or more and 15% or less.

In order to acquire such a microstructure of steel, for example, it is effective to subject a slab having the above components to hot rolling and cold rolling to form a cold-rolled steel sheet, and to subject the cold-rolled steel sheet to annealing under an appropriate annealing condition. As the annealing condition, the cold-rolled steel sheet is heated to a temperature region equal to or higher than an $Ac_3$ transformation point, held and transformed into austenite as necessary, and then cooled to a temperature region equal to or lower than a temperature at which transformation from austenite to martensite starts (Ms point), and a structure of martensite, untransformed austenite, and ferrite is acquired. Then, reheating to a temperature range of the Ms point or more and less than an $Ac_1$ transformation point is performed, and holding is performed as necessary. This causes martensite to become tempered martensite and untransformed austenite to become martensite or retained austenite.

In addition, in a process in which the collision load is input from the side surface of the side sill structure of the present invention and the impact absorption structure A is crushed beyond buckling strength, the impact absorption structure A (sectionally groove-shaped members 4a and 4b and bulkheads 6) absorbs the collision energy by repeatedly generating bellows-shaped buckling deformation while bending. In this process, when the impact absorption structure A is buckled and deformed without cracking, the collision energy is most easily absorbed. In order to acquire such an effect, the metal sheet of the impact absorption structure A preferably has ultimate deformability $\varepsilon_l$, which is a strain at the time of fracture in a tensile test, of 0.55 or more. As a result, the fracture is not easily generated even against locally severe deformation due to crushing, the strength of the entire side sill structure is sufficiently secured, and the high collision energy absorption property can be acquired. In consideration of variations in material, the ultimate deformability $\varepsilon_l$ of the metal sheet is more preferably 0.75 or more, and specifically preferably 0.88 or more.

The ultimate deformability $\varepsilon_l$ is acquired by performance of a room temperature tensile test in accordance with JIS Z2241, measurement of a sheet width W and a sheet thickness T at a fracture surface of a tensile test piece after the tensile test, and calculation by the following expression (1) together with a sheet width $W_0$ and a sheet thickness $T_0$ of the tensile test piece before the tensile test.

$$\varepsilon_l = -\{\ln(W/W_0) + \ln(T/T_0)\} \qquad\qquad (1)$$

However, W: sheet width at the fracture surface of the tensile test piece after the tensile test (mm)

$W_0$: sheet width of the tensile test piece before the tensile test (mm)
T: sheet thickness at the fracture surface of the tensile test piece after the tensile test (mm)
$T_0$: sheet thickness of the tensile test piece before the tensile test (mm)

In order to improve the ultimate deformability $\varepsilon_l$ of the metal sheet, for example, it is effective to adjust a cooling condition (cooling stop temperature and cooling rate), reheating condition (reheating temperature and holding time), and the like at the time of annealing in order to appropriately balance the area ratios of tempered martensite and martensite that are a second phase effective for achieving high strength while improving the ultimate deformability of the metal sheet.

In addition, in a bellows-shaped bent portion where the impact absorption structure A is buckled and deformed in a bellows shape, stress is concentrated on an outer surface of the bend, and cracking is likely to be generated. Then, it is preferable to use a metal sheet having excellent bending workability as that of the impact absorption structure A. Specifically, in a 90° V-bending test based on the V block method of JIS Z2248, it is preferable to use a metal sheet in which a ratio R/t of a limiting bend radius R in which a crack (crack) is not generated (that is, a tip R of a minimum V-shaped punch in which a crack (crack) is not generated) (mm) to a sheet thickness t (mm) is 7.0 or less and which has excellent bending workability. In consideration of variations in material, a metal sheet having R/t of 3.5 or less is more preferable, and a metal sheet having R/t of 2.0 or less is specifically preferable. In order to improve the bending workability of the metal sheet and acquire R/t in the above manner, for example, it is effective to adjust the cooling condition (cooling stop temperature and cooling rate), reheating condition (reheating temperature and holding time), and the like during annealing in order to make the area ratio of retained austenite appropriate. Examples of the metal sheet included in the impact absorption structure A include, but are not limited to, a cold-rolled steel sheet, a hot-dip galvanizing steel sheet acquired by galvanizing of the cold-rolled steel sheet, a galvannealed steel sheet, and an electro-galvanizing steel sheet.

<Collision deformation form at the time of side collision of the side sill structure>

A collision deformation form at the time of side collision of the side sill structure of the present invention will be described. A state of deformation at the time of the side pole collision will be described in stages while the time (number of seconds) from the collision start is described as an example for reference. The time (number of seconds) from the start of the collision is merely an example. First, a form of cross-sectional deformation of the side sill 1 itself will be described. First, the upper and lower lateral surface portions 101A (energy absorption portions) of the side sill outer 1a are bent and crushed in such a manner as to spread outward and absorb collision energy (from 0.002 sec). In the process of crushing of the side sill outer 1a, a cross section of the side sill 1 is prevented from opening up and collapsing (cross-sectional collapsing) by the partition member 2, and the upper and lower lateral surface portions 101A (energy absorption portions) of the side sill outer 1a continue to be bent and deformed and continue to absorb the collision energy until being completely crushed from 0.006 to 0.014 sec. As the side sill outer 1a is crushed and deformed as described above, a collision load is transmitted to the side sill inner 1b through the flange portions 102 of the side sill 1 and opening in the vertical direction and collapsing of the cross section is prevented by the partition member 2, and a flange portion side of the upper and lower lateral surface portions 101B (energy absorption portions) of the side sill inner 1b is bent and crushed in a recessed shape to the inside of the closed cross section of the side sill 1 after 0.004 sec.

With such cross-sectional deformation of the side sill 1 itself, the impact absorption structure A is deformed in cross section as follows. The crushed side sill outer 1a and the longitudinal surface portion 40 of the sectionally groove-shaped member 4a come into contact with each other, the collision load is transmitted to the impact absorption structure A, and crushing (axial crush) in which the outer side portion (sectionally groove-shaped member 4a and bulkhead 6) is deformed in the bellows shape is started (from 0.002 sec). Since the "bulkhead 6 which includes a plurality of bulkhead portions 60 arranged in parallel and in which side end portions of adjacent bulkhead portions 60 are coupled by a junction 61" is provided in the side sill structure of the present invention, when the outer side portion (sectionally groove-shaped member 4a and bulkhead 6) is crushed (axially crushed), deformation of bulkheads 6' in the manner illustrated in FIG. 30 (deformation in which portions on the partition member side of the two bulkheads 6' spread rightward and leftward), that is, deformation (movement) in which the adjacent bulkhead portions 60 of the bulkheads 6 in the closed sectional space 5a spread rightward and leftward (vehicle front-rear direction) is not generated in an initial stage of the deformation by the side collision. As a result, a load transfer path of the collision load from the outer side portion (sectionally groove-shaped member 4a and bulkhead 6) of the impact absorption structure A to the inner side portion (sectionally groove-shaped member 4b and bulkhead 6) of the impact absorption structure A via the partition member 2 (furthermore, a load transfer path of the collision load to the floor cross members 8 and the battery case side member 90) is maintained. Thus, as the outer side portion (sectionally groove-shaped member 4a and the bulkhead 6) of the impact absorption structure A is crushed, the inner side portion (sectionally groove-shaped member 4b and bulkhead 6) of the impact absorption structure A continuous via the partition member 2 is pressed toward the battery case 9 via the side sill inner 1b (0.004 to 0.006 sec), and crushing the inner side portion (sectionally groove-shaped member 4b and bulkhead 6) of the impact absorption structure A is also started (0.008 to 0.018 sec).

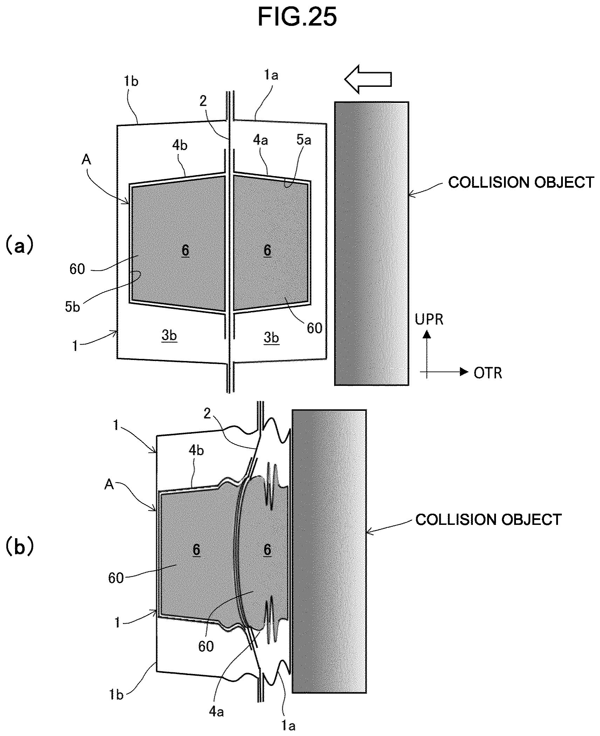

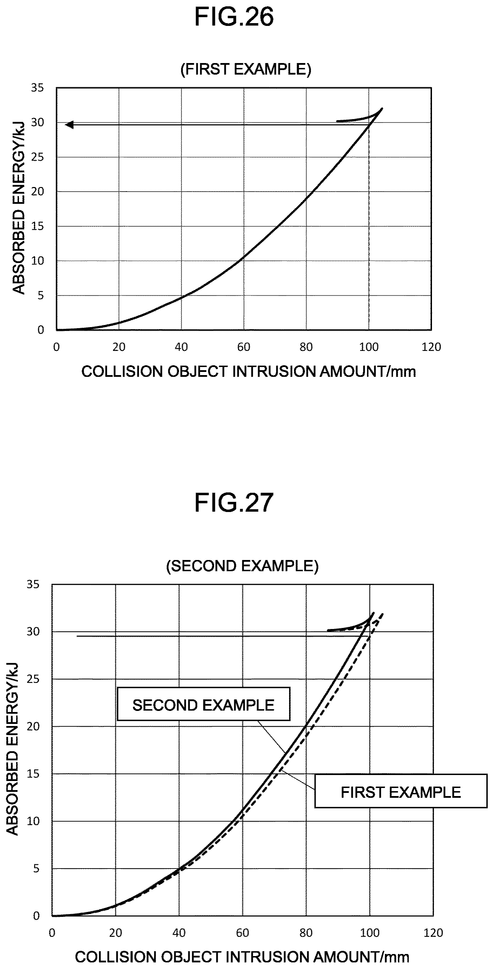

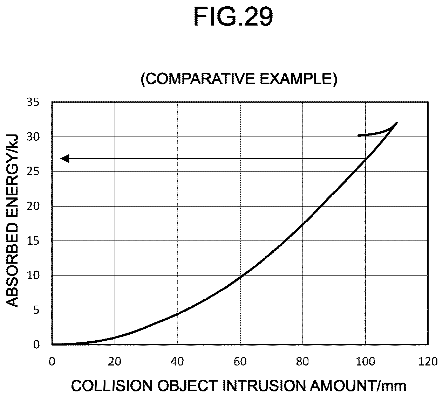

FIG. 25 is a view schematically illustrating a state of deformation in a longitudinal section in the vehicle width direction at the time of the side pole collision when the side pole collision test is performed on the side sill structure of the present invention of the embodiment (first form) illustrated in FIG. 1 to FIG. 3 under the following conditions. As illustrated in FIG. 25(b), crushing of the inner side portion (sectionally groove-shaped member 4b and bulkhead 6) is smaller than that of the outer side portion (sectionally groove-shaped member 4a and bulkhead 6). FIG. 26 is a view illustrating a relationship between the collision object intrusion amount and the absorbed energy at the time of the deformation in the side pole collision test (first example). In addition, FIG. 27 is a view illustrating a relationship between the collision object intrusion amount and the absorbed energy of when a similar side pole collision test is performed on the side sill structure of the present invention of the embodiment (second form) illustrated in FIG. 6 and FIG. 7 and the deformation is caused in this collision test (second example. The first example in FIG. 26 is also illustrated for comparison). On the other hand, FIG. 29 is a view illustrating a relationship between the collision object intrusion amount and the absorbed energy of when a similar side pole collision test is performed on the side sill structure of FIG. 28, which is a comparative example, and the deformation is caused in this collision test.

Collision object : rigid pole of R 127 mm (corresponding to a diameter of 254 mm)
Collision speed: 30.9 km/h
Collision energy: 32 kJ

While the absorbed energy at a collision object intrusion amount of 100 mm is 26.6 kJ in the comparative example illustrated in FIG. 29, that of the first example of FIG. 26 is 28.6 kJ, and the absorbed energy is improved by 7.5%.

Furthermore, in the second example in FIG. 27, 28.6 kJ that is the same as that of the first example is reached with a collision object intrusion amount of 97 mm shorter by 3 mm than that of the first invention example. The reason for this is considered as follows. As illustrated in FIG. 25(b), the outer side portion (sectionally groove-shaped member 4a and bulkhead 6) having a large crushing amount is dominant in the collision energy absorption at the time of the side pole collision of the first example (FIGS. 1 to 3). Thus, it is considered that a collision energy absorption characteristic equivalent to that of the first example is also acquired in the second example (FIGS. 6 and 7) not including the sectionally groove-shaped member 4b on the inner side. On the other hand, in the inner side portion of the first example, the longitudinal surface portion 40 of the sectionally groove-shaped member 4b and the longitudinal surface portion 100 of the side sill inner 1b opposed thereto are opposed to each other with a predetermined gap therebetween without being joined or abutted. On the other hand, in the inner side portion of the second example, the bulkhead 6 is joined to the inside of the longitudinal surface portion 100 of the side sill inner 1b via the flange portions 62. Thus, the load transfer path in which the collision load input to the side sill outer 1a is transferred to the floor cross members 8 and the battery case side member 90 through the "bulkheads 6 opposed to each other in the vehicle width direction with the partition member 2 being interposed therebetween" and the "side sill inner 1b" is formed earlier in the second example than in the first example, and crushing of the impact absorption structure A and the side sill 1 is started earlier in the second example than in the first example. Thus, in the second example, it is considered that 28.6 kJ, which is the same as that of the first example, is reached at the collision object intrusion amount of 97 mm that is shorter by 3 mm than that in of the first example.

In the cross-sectional deformation of the side sill structure at the time of the side collision in the above manner, the impact absorption structure A which is installed in the side sill 1 via the partition member 2 and in which the sectionally groove-shaped members 4a and 4b and the bulkheads 6 having a specific structure and arrangement form are integrated together with the partition member 2 has high deformation resistance. Thus, since the side sill 1 is integrally deformed as a whole without being locally deformed (for example, deformed in a manner of being bent from a collision portion) with respect to the input load, the collision energy is effectively and appropriately absorbed. Thus, in the side sill structure of the present invention, as illustrated in FIG. 3, in an automobile (specifically, electric vehicle) including a battery module below the floor panel 7 between the both side sills 1, the impact absorption structure A is crushed by a load input in the vehicle width direction at the time of the side collision and absorbs energy, and the load is transmitted to the floor cross members 8 and the battery case 9. Thus, the load is prevented from being transmitted to the battery pack 10, and the battery pack 10 can be protected from the impact of the collision.

Industrial Applicability

The present invention can provide a side sill structure of an automobile which side sill structure is capable of acquiring a high collision energy absorption characteristic with a small collision deformation amount while controlling an increase in weight by a structural member.

Reference Signs List

1 SIDE SILL
1a SIDE SILL OUTER
1b SIDE SILL INNER
2 PARTITION MEMBER
3, 3a, 3b CLOSED SECTIONAL SPACE
4a, 4b SECTIONALLY GROOVE-SHAPED MEMBER
5a, 5b CLOSED SECTIONAL SPACE
6 BULKHEAD
7 FLOOR PANEL
8 FLOOR CROSS MEMBER
9 BATTERY CASE
10 BATTERY PACK
11 FIXING BOLT
12 JOINT PORTION
13 ADHESIVE
40 LONGITUDINAL SURFACE PORTION
41A, 41B LATERAL SURFACE PORTION
42 FLANGE PORTION
43 BEAD

44 RECESSED PART
60, $60_x$, $60_y$ BULKHEAD PORTION
61 JUNCTION
62 FLANGE PORTION
63 EXTENDING PLATE PART
64 BEAD
70 FLANGE PORTION
90 BATTERY CASE SIDE MEMBER
91 BATTERY CASE BOTTOM PLATE
92 MOUNTING FLANGE PORTION
100 LONGITUDINAL SURFACE PORTION
101A, 101B LATERAL SURFACE PORTION
102 FLANGE PORTION
A IMPACT ABSORPTION STRUCTURE
e PORTION
c CONCAVE PART
s SPACE PORTION
f, g CORNER R PORTION
x, y REGION

**Claims**

1. A side sill structure of an automobile, including a partition member (2) vertically passing through a closed sectional space (3) in a side sill (1), the partition member (2) being configured to partition the closed sectional space (3) into two closed sectional spaces (3a, 3b) in a vehicle width direction, the side sill structure comprising:

   an impact absorption structure (A) including

   a pair of sectionally groove-shaped members (4a, 4b) joined to the partition member (2) in a state of sandwiching the partition member (2) from both sides and forming closed sectional spaces (5a, 5b) respectively with the partition member (2) in the closed sectional spaces (3a, 3b), and
   bulkheads (6) provided respectively in the closed sectional spaces (5a, 5b) in the vehicle width direction to partition the closed sectional spaces (5a, 5b) and provided at a plurality of positions at intervals in a vehicle front-rear direction in the closed sectional spaces (5a, 5b), wherein

   each of the bulkheads (6) includes

   a plurality of bulkhead portions (60) arranged in parallel, and
   a junction (61) configured to couple the adjacent bulkhead portions (60) between side end portions thereof,

   the bulkhead (6) in the closed sectional space (5a) and the bulkhead (6) in the closed sectional space (5b) are provided at a same position in the vehicle front-rear direction in such a manner that at least one each of the junctions (61) are opposed to each other in the vehicle width direction with the partition member (2) being interposed therebetween, and each of the bulkheads (6) is joined to at least the sectionally groove-shaped member (4a) or the sectionally groove-shaped member (4b),
   a part of bulkhead portions among all the bulkhead portions (60) included in the plurality of bulkheads (6) provided at intervals in the vehicle front-rear direction are arranged in a region (x) that is within a width of a floor cross member in the vehicle front-rear direction, and remaining bulkhead portions are arranged in a region (y) that is outside the width of the floor cross member in the vehicle front-rear direction, and
   the two or more bulkhead portions are arranged in the region (x), and w1 < w2 is satisfied where an interval between the two bulkhead portions adjacent to each other in the region (x) is represented by w1 and an interval between the bulkhead portions and the bulkhead portion adjacent thereto is represented by w2 in the vehicle front-rear direction.

2. The side sill structure of an automobile according to claim 1, wherein beads (64) are formed on lateral surface portions (41A, 41B) of the sectionally groove-shaped members (4a, 4b) in the vehicle width direction, and joining flange portions (62) formed on the bulkhead portions (60) of the bulkheads (6) are fitted into the beads (64).

3. The side sill structure of an automobile according to claim 1 or 2, wherein

   an extending plate part (63) is continuously provided at each of an upper end and a lower end of the junctions (61), which are opposed to the partition member (2), of the bulkheads (6), and
   in each of upper and lower joint portions between the sectionally groove-shaped members (4a, 4b) and the partition member (2), the both members are joined in a state in which the upper and lower extending plate parts (63) are sandwiched between the both members.

4. The side sill structure of an automobile according to any one of claims 1 to 3, wherein a longitudinal surface portion (40) of each of the sectionally groove-shaped members (4a, 4b) and longitudinal surface portions (100) of the side sill (1) opposed thereto are (i) directly joined or abutted, (ii) joined or abutted via another member, and (iii) opposed to each other with a predetermined gap therebetween without being joined or abutted.

5. The side sill structure of an automobile according to any one of claims 1 to 4, wherein in the impact absorption structure (A), one of an inner side portion or an outer side portion sandwiching the partition member (2) extends in a vehicle height direction compared to the other.

6. A side sill structure of an automobile, including a partition member (2) vertically passing through a closed sectional space (3) in a side sill (1), the partition member being configured to partition the closed sectional space (3) into two closed sectional spaces (3a, 3b) in a vehicle width direction, the side sill structure comprising:

   an impact absorption structure (A) including

   a sectionally groove-shaped member (4a) joined to the partition member (2) and forming a closed sectional space (5a) with the partition member (2) in the closed sectional space (3a) on a vehicle outer side, and bulkheads (6) provided respectively in the closed sectional space (5a) and the closed sectional space (3b) on a vehicle inner side in the vehicle width direction to partition the closed sectional space (5a) and the closed sectional space (3b), and provided at a plurality of positions at intervals in a vehicle front-rear direction in the closed sectional space (5a) and the closed sectional space (3b), wherein

   each of the bulkheads (6) includes

   a plurality of bulkhead portions (60) arranged in parallel, and
   a junction (61) configured to couple the adjacent bulkhead portions (60) between side end portions thereof,

   the bulkheads (6) in the closed sectional space (5a) and the bulkheads (6) in the closed sectional space (3b) are provided at same positions in the vehicle front-rear direction in such a manner that at least one each of the junctions (61) are opposed to each other in the vehicle width direction with the partition member (2) being interposed therebetween, and each of the bulkheads (6) in the closed sectional space (5a) is joined to at least the sectionally groove-shaped member (4a) and each of the bulkheads (6) in the closed sectional space (3b) is joined to at least the side sill (1),
   a part of bulkhead portions among all the bulkhead portions (60) included in the plurality of bulkheads (6) provided at intervals in the vehicle front-rear direction are arranged in a region (x) that is within a width of a floor cross member in the vehicle front-rear direction, and remaining bulkhead portions are arranged in a region (y) outside the width of the floor cross member in the vehicle front-rear direction, and
   the two or more bulkhead portions are arranged in the region (x), and w1 < w2 is satisfied where an interval between the two bulkhead portions adjacent to each other in the region (x) is represented by w1 and an interval between the bulkhead portions and the bulkhead portion adjacent thereto is represented by w2 in the vehicle front-rear direction.

7. The side sill structure of an automobile according to claim 6, wherein beads (64) are formed on a lateral surface portion (41A) of the sectionally groove-shaped member (4a) in the vehicle width direction, and joining flange portions (62) formed on the bulkhead portions (60) of the bulkheads (6) are fitted into the beads (64).

8. The side sill structure of an automobile according to claim 6 or 7, wherein

   an extending plate part (63) is continuously provided at each of an upper end and a lower end of the junctions (61), which are opposed to the partition member (2), of the bulkheads (6) in the closed sectional space (5a), and

in each of upper and lower joint portions between the sectionally groove-shaped member (4a) and the partition member (2), the both members are joined in a state in which the upper and lower extending plate parts (63) are sandwiched between the both members.

9. The side sill structure of an automobile according to any one of claims 6 to 8, wherein a longitudinal surface portion (40) of the sectionally groove-shaped member (4a) and a longitudinal surface portion (100) of the side sill (1) opposed thereto are (i) directly joined or abutted, (ii) joined or abutted via another member, or (iii) opposed to each other with a predetermined gap therebetween without being joined or abutted.

10. The side sill structure of an automobile according to any one of claims 1 to 9, wherein w1 < w3 is satisfied where an interval between the adjacent bulkheads (6) is represented by w3 in the vehicle front-rear direction.

11. The side sill structure of an automobile according to claim 10, wherein

    each of w1, w2 and w3 is 254 mm or less, and
    w4 is 254 mm or less where the bulkhead (6) is provided in the region (y) and an interval between the adjacent bulkhead portions of the bulkhead (6) is represented by w4.

12. The side sill structure of an automobile according to any one of claims 1 to 11, wherein the bulkhead portions (60) and the junctions (61) of the bulkheads (6) are formed of a metal sheet bent and formed in a gate type shape or a rectangular wave shape in plan view.

13. The side sill structure of an automobile according to any one of claims 1 to 12, wherein the partition member (2) and the junctions (64) of the bulkheads (6) opposed thereto are (i) directly joined or abutted, (ii) joined or abutted via another member, or (iii) opposed to each other with a predetermined gap therebetween without being joined or abutted.

14. The side sill structure of an automobile according to any one of claims 1 to 13, wherein beads (62) are formed in the bulkhead portions (60) of the bulkheads (6).

15. The side sill structure of an automobile according to any one of claims 1 to 14, wherein a concave part (c) is formed in the impact absorption structure (A) in such a manner as to be opposed to an inner surface of the side sill (1).

16. The side sill structure of an automobile according to any one of claims 1 to 15, wherein a metal sheet included in the impact absorption structure (A) has yield strength equal to or less than yield strength of a metal sheet included in the floor cross member.

17. The side sill structure of an automobile according to any one of claims 1 to 16, wherein a metal sheet included in the impact absorption structure (A) has tensile strength of 780 MPa-grade or more, or a Vickers hardness (HV) of 250 or more at a position of 1/4 of a sheet thickness of the metal sheet.

18. The side sill structure of an automobile according to any one of claims 1 to 17, wherein
    a metal sheet included in the impact absorption structure (A) is a steel sheet including in % by mass,

    C: 0.030% or more and 0.250% or less,
    Si: 0.01% or more and 2.50% or less,
    Mn: 1.00% or more and less than 3.50%,
    P: 0.001% or more and 0.100% or less,
    S: 0.0200% or less, and
    Al: 0.010% or more and 2.000% or less.

19. The side sill structure of an automobile according to any one of claims 1 to 18, wherein a metal sheet included in the impact absorption structure (A) has a microstructure of steel which microstructure includes, at a position of 1/4 of a sheet thickness of the metal sheet, ferrite in an area ratio of 0% or more and 65% or less, martensite and tempered martensite in an area ratio of 30% or more and 100% or less in total, and retained austenite in an area ratio of 0% or more and 15% or less.

20. The side sill structure of an automobile according to any one of claims 1 to 19, wherein a metal sheet included in the impact absorption structure (A) has ultimate deformability of 0.55 or more in a tensile test.

21. The side sill structure of an automobile according to any one of claims 1 to 20, wherein in a metal sheet included in the impact absorption structure (A), a limiting bend radius R (mm) at which a crack is not generated when a 90° V-bending test is performed and a sheet thickness t (mm) of the metal sheet satisfy R/t ≤ 7.0.

# FIG.1

VEHICLE
INNER SIDE

VEHICLE
OUTER SIDE

UPR

OTR

EP 4 667 333 A1

# FIG.2

# FIG.3

UPR

OTR

FIG.4

# FIG.5

FLOOR CROSS MEMBER

FLOOR PANEL

BATTERY CASE UPPER

BATTERY CASE LOWER

BATTERY CASE CROSS

UP

FR

# FIG.6

VEHICLE INNER SIDE

VEHICLE OUTER SIDE

UPR

OTR

# FIG.7

EP 4 667 333 A1

VEHICLE REAR SIDE ◄─────────► VEHICLE FRONT SIDE

<u>VEHICLE OUTER SIDE</u>

<u>VEHICLE INNER SIDE</u>

# FIG.8

# FIG.9

FIG.10

(a)

VEHICLE REAR SIDE ←→ VEHICLE FRONT SIDE

(b)

VEHICLE REAR SIDE ←→ VEHICLE FRONT SIDE

(c)

VEHICLE REAR SIDE ←→ VEHICLE FRONT SIDE

EP 4 667 333 A1

# FIG.11

(a)

VEHICLE REAR SIDE ⟷ VEHICLE FRONT SIDE

VEHICLE OUTER SIDE

VEHICLE INNER SIDE

w1  w2 (w3)  w4  w2 (w3)  w1

2  1  4a

$60_x$  wa  $60_y$  $60_x$  4b

wb

x  y  x

(b)

VEHICLE REAR SIDE ⟷ VEHICLE FRONT SIDE

VEHICLE OUTER SIDE

VEHICLE INNER SIDE

w1  w2 (w3)  w4  w3  w4  w2 (w3)  w1

2  1  4a

$60_x$  wa  $60_y$  $60_x$ 4b

wb

x  y  x

(c)

VEHICLE REAR SIDE ⟷ VEHICLE FRONT SIDE

VEHICLE OUTER SIDE

VEHICLE INNER SIDE

w1  w2 (w3)  w4  w3  w4  w3  w4  w2 (w3)  w1

2  1  4a

$60_x$  wa  $60_y$  $60_x$ 4b

wb

x  y  x

FIG.12

EP 4 667 333 A1

# FIG.13

VEHICLE
OUTER SIDE

VEHICLE
INNER SIDE

# FIG.14

(a)

(b)

UPR

OTR

EP 4 667 333 A1

# FIG.15

FIG.16

(a)

(b)

UPR
OTR

# FIG.17

FIG.18

VEHICLE FRONT-REAR
DIRECTION

EP 4 667 333 A1

# FIG.19

(a)

VEHICLE WIDTH
DIRECTION

(b)

VEHICLE FRONT-REAR
DIRECTION

# FIG.20

EP 4 667 333 A1

FIG.21

(a)

(b)

# FIG.22

# FIG.23

EP 4 667 333 A1

# FIG.24

# FIG.25

(a)

(b)

EP 4 667 333 A1

# FIG.26

**(FIRST EXAMPLE)**

COLLISION OBJECT INTRUSION AMOUNT/mm

# FIG.27

**(SECOND EXAMPLE)**

COLLISION OBJECT INTRUSION AMOUNT/mm

51

# FIG.28

VEHICLE REAR SIDE ◄─────────────► VEHICLE FRONT SIDE

<u>VEHICLE OUTER SIDE</u>

<u>VEHICLE INNER SIDE</u>

EP 4 667 333 A1

# FIG.29

(COMPARATIVE EXAMPLE)

## FIG.30

TOP VIEW

VEHICLE OUTER SIDE

VEHICLE INNER SIDE

BULKHEAD

6'   6'   6'

(1) BEFORE COLLISION

TRANSMIT COLLISION LOAD TO RIGID WALL

(2) FRACTURE OF SPOT WELDED PORTION

DEFORMED IN SUCH MANNER THAT PORTION OF xx SPREAD RIGHTWARD AND LEFTWARD WHEN SHEARED STRESS IS GENERATED AND SPOT WELDED PORTION IS FRACTURED

(3) IN AND AFTER FRACTURE OF SPOT WELDED PORTION

LOAD TRANSMISSION AMOUNT IS DECREASED BY RIGHTWARD AND LEFTWARD MOVEMENT OF BULKHEAD ON OUTER SIDE

## INTERNATIONAL SEARCH REPORT

| International application No. |
|---|
| **PCT/JP2024/004373** |

### A. CLASSIFICATION OF SUBJECT MATTER

**B62D 25/20**(2006.01)i
FI: B62D25/20 F

According to International Patent Classification (IPC) or to both national classification and IPC

### B. FIELDS SEARCHED

Minimum documentation searched (classification system followed by classification symbols)

B62D25/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| P, A | WO 2023/090112 A1 (JFE STEEL CORPORATION) 25 May 2023 (2023-05-25) fig. 1-9 | 1-21 |
| P, A | JP 7282303 B1 (JFE STEEL CORPORATION) 29 May 2023 (2023-05-29) claims 1-8 | 1-21 |
| A | JP 2018-203029 A (HONDA MOTOR CO., LTD.) 27 December 2018 (2018-12-27) fig. 5, 6 | 1-21 |
| A | JP 2021-66269 A (HONDA MOTOR CO., LTD.) 30 April 2021 (2021-04-30) fig. 3, 4 | 1-21 |

☐ Further documents are listed in the continuation of Box C.   ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **05 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/004373**

| Patent document cited in search report | | | Publication date (day/month/year) | Patent family member(s) | Publication date (day/month/year) |
|---|---|---|---|---|---|
| WO | 2023/090112 | A1 | 25 May 2023 | (Family: none) | |
| JP | 7282303 | B1 | 29 May 2023 | (Family: none) | |
| JP | 2018-203029 | A | 27 December 2018 | US 2021/0221436 A1 fig. 5, 6 WO 2018/216614 A1 fig. 5, 6 | |
| JP | 2021-66269 | A | 30 April 2021 | (Family: none) | |

Form PCT/ISA/210 (patent family annex) (July 2022)

**REFERENCES CITED IN THE DESCRIPTION**

**Patent documents cited in the description**

- JP 10059218 A
- JP 2009202620 A
- JP 2013049378 A
- JP 2017226353 A
- JP 2021146973 A
- JP 2011530450 A